(19) Europäisches Patentamt
European Patent Office
Office européen des brevets

(11) **EP 4 787 753 A1**

(12) **EUROPEAN PATENT APPLICATION**
published in accordance with Art. 153(4) EPC

(43) Date of publication:
**05.08.2026  Bulletin 2026/32**

(21) Application number: **24886335.9**

(22) Date of filing: **01.11.2024**

(51) International Patent Classification (IPC):
**H04L 1/1812** (2023.01)    **H04L 1/1607** (2023.01)
**H04L 1/00** (2006.01)    **H04L 5/00** (2006.01)
**H04L 1/1829** (2023.01)    **H04L 1/1822** (2023.01)

(52) Cooperative Patent Classification (CPC):
**H04L 1/1614; H04L 1/1864; H04L 5/00;**
**H04L 1/1822**

(86) International application number:
**PCT/KR2024/017022**

(87) International publication number:
**WO 2025/095664 (08.05.2025 Gazette 2025/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **01.11.2023  KR 20230149487**

(71) Applicant: **Samsung Electronics Co., Ltd.**
**Suwon-si, Gyeonggi-do 16677 (KR)**

(72) Inventors:
• **CHOI, Kyungjun**
**Suwon-si, Gyeonggi-do 16677 (KR)**
• **LIM, Seongmok**
**Suwon-si, Gyeonggi-do 16677 (KR)**
• **KIM, Younsun**
**Suwon-si, Gyeonggi-do 16677 (KR)**
• **JI, Hyoungju**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR TRANSMITTING AND RECEIVING DOWNLINK FEEDBACK INFORMATION IN WIRELESS COMMUNICATION SYSTEM**

(57)    The present disclosure relates to a 5G or 6G communication system for supporting higher data transmission rates. The present disclosure provides a method for configuring and receiving a downlink control channel in a wireless communication system. The method performed by a terminal in a communication system according to one embodiment of the present disclosure comprises the steps of: receiving, through higher layer signaling, a configuration for the maximum number of ranks related to physical uplink shared channel (PUSCH) transmission and a configuration for the maximum number of multi-input multi-output (MIMO) layers related to the PUSCH transmission; performing the PUSCH transmission, wherein at least one PUSCH included in the PUSCH transmission includes two transport blocks (TBs) on the basis that at least one of the maximum number of ranks or the maximum number of layers exceeds 4; and receiving downlink control information (DCI) via a physical downlink control channel (PDCCH).

FIG. 15

Report, by UE to base station, maximum number of MIMO layers or maximum rank for uplink of UE as UE capability — 1500

Receive, by UE from base station, higher layer signal for configuring maximum number of MIMO layers or maximum rank for uplink — 1510

When maximum number of MIMO layers or maximum rank exceeds 4, assume, by UE, that HARQ bitmap for 1st TB field and HARQ bitmap for 2nd TB field are included in DCI format 0_1 including CG-DFI — 1520

When length of DCI format 0_1 including CG-DFI is greater than length of DCI format 0_1 scheduling PUSCH, perform method of reducing length of CG-DFI — 1530

Receive CG-DFI determined according to reduction method to obtain valid HARQ-ACK information, and determine whether to retransmit CG PUSCH and determine to update contention window size, based on HARQ-ACK information — 1540

**Description**

[**Technical Field**]

The disclosure relates to operations of a terminal and a base station in a wireless communication system. Specifically, the disclosure relates to a method and a device for receiving downlink feedback information by a terminal when the terminal can transmit a maximum of two transport blocks (TBs) via a physical uplink shared channel.

[**Background Art**]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to smoothly provide these services.

**[Disclosure of Invention]**

**[Technical Problem]**

Embodiments set forth herein are to provide a device and a method capable of effectively providing services in a mobile communication system.

The technical subjects pursued in embodiments set forth herein may not be limited to the above-mentioned matters, and other technical subjects which are not mentioned herein may be considered by those skilled in the art from various embodiments of the disclosure to be described below.

[**Solution to Problem**]

The disclosure proposes a method of designing DCI including HARQ-ACK information of a PUSCH for a terminal that transmits two transport blocks through the PUSCH.

A method performed by a terminal in a communication system according to an embodiment of the disclosure includes receiving, through higher layer signaling, a configuration for a maximum rank value associated with a physical uplink shared channel (PUSCH) transmission and a configuration for a maximum number of multi-input multi-output (MIMO) layers associated with the PUSCH transmission, performing the PUSCH transmission, wherein one or more PUSCHs included in the PUSCH transmission include two transport blocks (TBs), based on that one or more of the maximum rank value or the maximum number of layers exceed 4, and receiving downlink control information (DCI) through a physical downlink control channel (PDCCH).

According to an embodiment of the disclosure, in case that a configuration for spatial bundling related to hybrid automatic repeat request (HARQ-ACK) information for a second TB associated with the PUSCH transmission is not received through the higher layer signaling, the DCI includes a first HARQ-ACK bitmap for a first TB associated with the PUSCH transmission and a second HARQ-ACK bitmap for a second TB associated with the PUSCH transmission, and based on that (i) one or more least significant bits (LSBs) among bits corresponding to the second HARQ-ACK bitmap are excluded (truncated) or (ii) one or more zero padding bits are added after an LSB of PUSCH scheduling DCI, the number of bits included in the DCI is identified as being equal to the number of bits included in the PUSCH scheduling DCI.

According to an embodiment of the disclosure, a HARQ process index is mapped in ascending order from a most significant bit (MSB) to an LSB of the first HARQ-ACK bitmap, and each bit of the first HARQ-ACK bitmap indicates acknowledgement (ACK) or negative ACK (NACK) of a first TB associated with a corresponding HARQ-ACK process, the HARQ process index is mapped in ascending order from an MSB to an LSB of bits corresponding to the second HARQ-ACK bitmap, and each bit corresponding to the second HARQ-ACK bitmap indicates ACK or NACK of a second TB associated with a corresponding HARQ-ACK process, in case that a configuration for the number of HARQ processes is received through the higher layer signaling, the number of bits corresponding to the first HARQ-ACK bitmap and the number of bits corresponding to the second HARQ-ACK bitmap are each 32 bits, and in case that the configuration for the number of HARQ processes is not received through the higher layer signaling, the number of bits corresponding to the first HARQ-ACK bitmap and the number of bits corresponding to the second HARQ-ACK bitmap are each 16 bits.

According to an embodiment of the disclosure, in case that the configuration for the spatial bundling is received through the higher layer signaling, the DCI includes a third HARQ-ACK bitmap, the third HARQ-ACK bitmap is based on that the spatial bundling is applied between a bit corresponding to the first HARQ-ACK bitmap and a bit corresponding to the second HARQ-ACK bitmap for an identical HARQ process, and the spatial bundling corresponds to a logical XOR operation or a logical OR operation.

According to an embodiment of the disclosure, the excluding (truncation) of the one or more LSBs, the adding of the one or more zero padding bits, or the applying of the spatial bundling is applied in case that the number of bits corresponding to the DCI is greater than the number of bits corresponding to the PUSCH scheduling DCI.

A terminal in a communication system according to an embodiment of the disclosure includes a transceiver and a processor connected to the transceiver, wherein the processor is configured to receive, through higher layer signaling, a configuration for a maximum rank value associated with a physical uplink shared channel (PUSCH) transmission and a configuration for a maximum number of multi-input multi-output (MIMO) layers associated with the PUSCH transmission, perform the PUSCH transmission, wherein one or more PUSCHs included in the PUSCH transmission include two transport blocks (TBs), based on that one or more of the maximum rank value or the maximum number of layers exceed 4, and receive downlink control information (DCI) through a physical downlink control channel (PDCCH).

According to an embodiment of the disclosure, in case that a configuration for spatial bundling related to hybrid automatic repeat request (HARQ-ACK) information for a second TB associated with the PUSCH transmission is not received through the higher layer signaling, the DCI includes a first HARQ-ACK bitmap for a first TB associated with the PUSCH transmission and a second HARQ-ACK bitmap for a second TB associated with the PUSCH transmission, and based on that (i) one or more least significant bits (LSBs) among bits corresponding to the second HARQ-ACK bitmap are excluded (truncated) or (ii) one or more zero padding bits are added after an LSB of PUSCH scheduling DCI, the number of bits included in the DCI is identified as being equal to the number of bits included in the PUSCH scheduling DCI.

According to an embodiment of the disclosure, a HARQ process index is mapped in ascending order from a most significant bit (MSB) to an LSB of the first HARQ-ACK bitmap, and each bit of the first HARQ-ACK bitmap indicates acknowledgement (ACK) or negative ACK (NACK) of a first TB associated with a corresponding HARQ-ACK process, the HARQ process index is mapped in ascending order from an MSB to an LSB of bits corresponding to the second HARQ-ACK bitmap, and each bit corresponding to the second HARQ-ACK bitmap indicates ACK or NACK of a second TB associated with a corresponding HARQ-ACK process, in case that a configuration for the number of HARQ processes is received through the higher layer signaling, the number of bits corresponding to the first HARQ-ACK bitmap and the number of bits corresponding to the second HARQ-ACK bitmap are each 32 bits, and in case that the configuration for the number of HARQ processes is not received through the higher layer signaling, the number of bits corresponding to the first HARQ-ACK bitmap and the number of bits corresponding to the second HARQ-ACK bitmap are each 16 bits.

According to an embodiment of the disclosure, in case that the configuration for the spatial bundling is received through the higher layer signaling, the DCI includes a third HARQ-ACK bitmap, the third HARQ-ACK bitmap is based on that the spatial bundling is applied between a bit corresponding to the first HARQ-ACK bitmap and a bit corresponding to the second HARQ-ACK bitmap for an identical HARQ process, and the spatial bundling corresponds to a logical XOR operation or a logical OR operation.

According to an embodiment of the disclosure, the excluding (truncation) of the one or more LSBs, the adding of the one or more zero padding bits, or the applying of the spatial bundling is applied in case that the number of bits corresponding to the DCI is greater than the number of bits corresponding to the PUSCH scheduling DCI.

A method performed by a base station in a communication system according to an embodiment of the disclosure includes transmitting, through higher layer signaling, a configuration for a maximum rank value associated with a physical uplink shared channel (PUSCH) transmission and a configuration for a maximum number of multi-input multi-output (MIMO) layers associated with the PUSCH transmission, receiving the PUSCH transmission, wherein one or more PUSCHs included in the PUSCH transmission include two transport blocks (TBs), based on that one or more of the maximum rank value or the maximum number of layers exceed 4, and transmitting downlink control information (DCI) through a physical downlink control channel (PDCCH).

According to an embodiment of the disclosure, in case that a configuration for spatial bundling related to hybrid automatic repeat request (HARQ-ACK) information for a second TB associated with the PUSCH transmission is not transmitted through the higher layer signaling, the DCI includes a first HARQ-ACK bitmap for a first TB associated with the PUSCH transmission and a second HARQ-ACK bitmap for a second TB associated with the PUSCH transmission, and based on that (i) one or more least significant bits (LSBs) among bits corresponding to the second HARQ-ACK bitmap are excluded (truncated) or (ii) one or more zero padding bits are added after an LSB of PUSCH scheduling DCI, the number of bits included in the DCI is identified as being equal to the number of bits included in the PUSCH scheduling DCI.

According to an embodiment of the disclosure, a HARQ process index is mapped in ascending order from a most significant bit (MSB) to an LSB of the first HARQ-ACK bitmap, and each bit of the first HARQ-ACK bitmap indicates acknowledgement (ACK) or negative ACK (NACK) of a first TB associated with a corresponding HARQ-ACK process, the HARQ process index is mapped in ascending order from an MSB to an LSB of bits corresponding to the second HARQ-ACK bitmap, and each bit corresponding to the second HARQ-ACK bitmap indicates ACK or NACK of a second TB associated with a corresponding HARQ-ACK process, in case that a configuration for the number of HARQ processes is transmitted through the higher layer signaling, the number of bits corresponding to the first HARQ-ACK bitmap and the number of bits corresponding to the second HARQ-ACK bitmap are each 32 bits, and in case that the configuration for the number of HARQ processes is not transmitted through the higher layer signaling, the number of bits corresponding to the first HARQ-ACK bitmap and the number of bits corresponding to the second HARQ-ACK bitmap are each 16 bits.

According to an embodiment of the disclosure, in case that the configuration for the spatial bundling is transmitted through the higher layer signaling, the DCI includes a third HARQ-ACK bitmap, the third HARQ-ACK bitmap is based on that the spatial bundling is applied between a bit corresponding to the first HARQ-ACK bitmap and a bit corresponding to the second HARQ-ACK bitmap for an identical HARQ process, and the spatial bundling corresponds to a logical XOR operation or a logical OR operation.

According to an embodiment of the disclosure, the excluding (truncation) of the one or more LSBs, the adding of the one or more zero padding bits, or the applying of the spatial bundling is applied in case that the number of bits corresponding to the DCI is greater than the number of bits corresponding to the PUSCH scheduling DCI.

A base station in a communication system according to an embodiment of the disclosure includes a transceiver and a processor connected to the transceiver, wherein the processor is configured to: transmit, through higher layer signaling, a configuration for a maximum rank value associated with a physical uplink shared channel (PUSCH) transmission and a configuration for a maximum number of multi-input multi-output (MIMO) layers associated with the PUSCH transmission, receive the PUSCH transmission, wherein one or more PUSCHs included in the PUSCH transmission include two transport blocks (TBs), based on that one or more of the maximum rank value or the maximum number of layers exceed 4, and transmit downlink control information (DCI) through a physical downlink control channel (PDCCH).

According to an embodiment of the disclosure, in case that a configuration for spatial bundling related to hybrid automatic repeat request (HARQ-ACK) information for a second TB associated with the PUSCH transmission is not received through the higher layer signaling, the DCI includes a first HARQ-ACK bitmap for a first TB associated with the PUSCH transmission and a second HARQ-ACK bitmap for a second TB associated with the PUSCH transmission, and based on that (i) one or more least significant bits (LSBs) among bits corresponding to the second HARQ-ACK bitmap are excluded (truncated) or (ii) one or more zero padding bits are added after an LSB of PUSCH scheduling DCI, the number of bits included in the DCI is identified as being equal to the number of bits included in the PUSCH scheduling DCI.

According to an embodiment of the disclosure, a HARQ process index is mapped in ascending order from a most significant bit (MSB) to an LSB of the first HARQ-ACK bitmap, and each bit of the first HARQ-ACK bitmap indicates acknowledgement (ACK) or negative ACK (NACK) of a first TB associated with a corresponding HARQ-ACK process, the HARQ process index is mapped in ascending order from an MSB to an LSB of bits corresponding to the second HARQ-ACK bitmap, and each bit corresponding to the second HARQ-ACK bitmap indicates ACK or NACK of a second TB associated with a corresponding HARQ-ACK process, in case that a configuration for the number of HARQ processes is transmitted through the higher layer signaling, the number of bits corresponding to the first HARQ-ACK bitmap and the number of bits corresponding to the second HARQ-ACK bitmap are each 32 bits, and in case that the configuration for the number of HARQ processes is not transmitted through the higher layer signaling, the number of bits corresponding to the first HARQ-ACK bitmap and the number of bits corresponding to the second HARQ-ACK bitmap are each 16 bits.

According to an embodiment of the disclosure, in case that the configuration for the spatial bundling is transmitted through the higher layer signaling, the DCI includes a third HARQ-ACK bitmap, the third HARQ-ACK bitmap is based on that the spatial bundling is applied between a bit corresponding to the first HARQ-ACK bitmap and a bit corresponding to the second HARQ-ACK bitmap for an identical HARQ process, and the spatial bundling corresponds to a logical XOR operation or a logical OR operation.

According to an embodiment of the disclosure, the excluding (truncation) of the one or more LSBs, the adding of the one or more zero padding bits, or the applying of the spatial bundling is applied in case that the number of bits corresponding to the DCI is greater than the number of bits corresponding to the PUSCH scheduling DCI.

Various embodiments of the disclosure as described above are merely some of preferred embodiments of the disclosure, and various embodiments reflecting technical features of the various embodiments of the disclosure may be derived and understood by those having ordinary skill in the art, based on the detailed description to be described below.

[**Advantageous Effects of Invention**]

Embodiments set forth herein provide a device and a method capable of effectively providing services in a mobile communication system.

Advantageous effects obtainable from embodiments set forth herein may not be limited to the above-mentioned effects, and other effects which are not mentioned herein may be clearly derived and understood by those skilled in the art, based on the following description.

[**Brief Description of Drawings**]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates an example of a control resource set configuration of a downlink control channel in a wireless communication system according to an embodiment of the disclosure.

FIG. 5 illustrates a structure of a downlink control channel in a wireless communication system according to an embodiment of the disclosure.

FIG. 6 illustrates a method in which a base station and a UE transmit and receive data in consideration of a downlink data channel and a rate matching resource in a wireless communication system according to an embodiment of the disclosure.

FIG. 7 illustrates an example of frequency-domain resource allocation with regard to a PDSCH in a wireless communication system according to an embodiment of the disclosure.

FIG. 8 illustrates an example of time-domain resource allocation with regard to a PDSCH in a wireless communication system according to an embodiment of the disclosure.

FIG. 9 illustrates an example of time-domain resource allocation according to subcarrier spacings with regard to a data channel and a control channel in a wireless communication system according to an embodiment of the disclosure.

FIG. 10 illustrates radio protocol structures of a base station and a UE in single cell, carrier aggregation, and dual connectivity situations in a wireless communication system according to an embodiment of the disclosure.

FIG. 11 illustrates CG-DFI including two bitmaps for two transport blocks according to an embodiment of the disclosure.

FIG. 12 illustrates CG-DFI including one bitmap for two transport blocks according to an embodiment of the disclosure.

FIG. 13 illustrates CG-DFI including two bitmaps for two transport blocks according to an embodiment of the disclosure.

FIG. 14 illustrates an operation of a terminal according to an embodiment of the disclosure.

FIG. 15 is a flowchart illustrating an operation of a terminal according to an embodiment of the disclosure.

FIG. 16 illustrates a structure of a UE in a wireless communication system according to an embodiment of the disclosure.

FIG. 17 illustrates a structure of a base station in a wireless communication system according to an embodiment of the disclosure.

[**Mode for the Invention**]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Accordingly, the definitions thereof should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, or NR) developed beyond LTE-A, and in the following description, the "5G" may be the concept that covers the exiting LTE, LTE-A, and other similar services. Moreover, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of things. Since the Internet of things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and may also requires a packet error rate of $10^{-5}$ or less. Therefore, for the services supporting URLLC, the 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

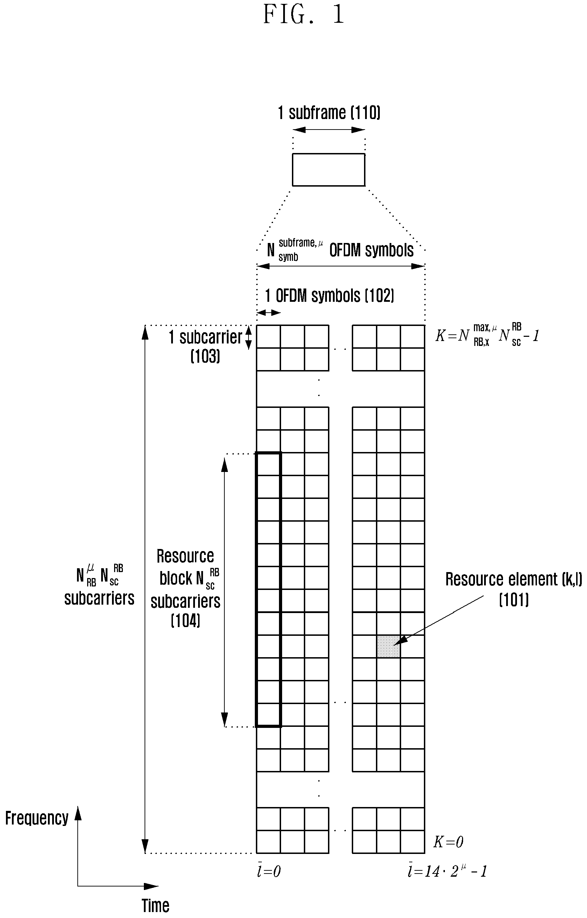

FIG. 1 illustrates a basic structure of a time-frequency domain, which is a radio resource domain used to transmit data or control channels, in a 5G system;

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104.

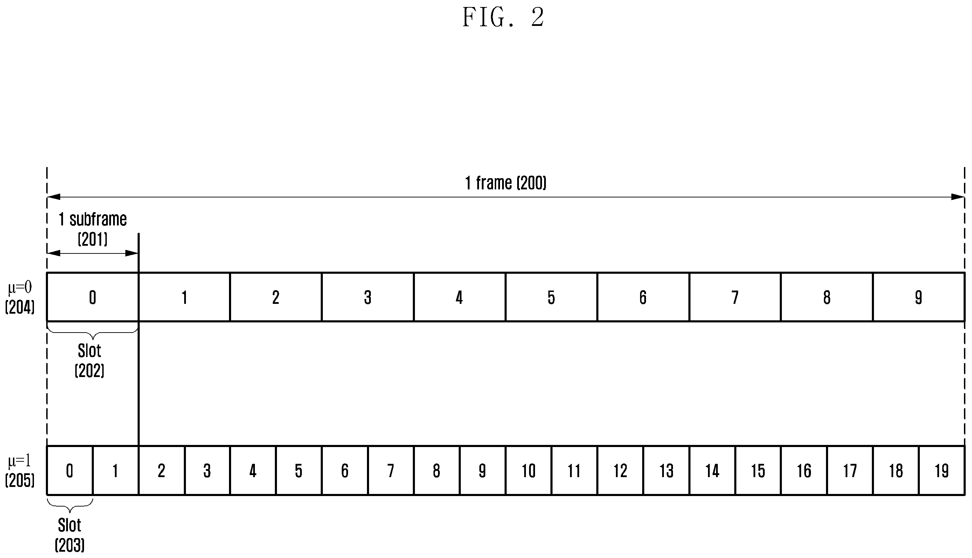

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values μ for the subcarrier spacing 204 or 205. The example in FIG. 2 illustrates a case in which the subcarrier spacing configuration value is μ=0 (204), and a case in which μ=1 (205). In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration μ as in Table 1 below.

[Table 1]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, bandwidth part (BWP) configuration in a 5G communication system will be described in detail with reference to the accompanying drawings.

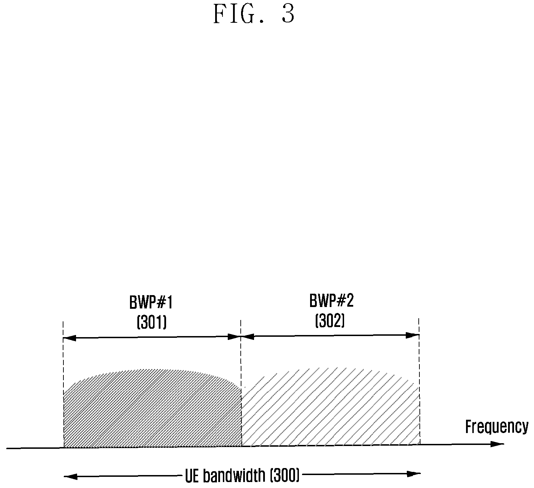

FIG. 3 illustrates an example of a bandwidth part configuration in a wireless communication system according to an embodiment of the disclosure.

FIG. 3 shows an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

| BWP ::=                    SEQUENCE { |
|---|
| bwp-Id                    BWP-Id, |
| (bandwidth part identifier) |

| locationAndBandwidth        INTEGER (1..65536), |
|---|
| (bandwidth part location) |
| subcarrierSpacing        ENUMERATED {n0, n1, n2, n3, n4, n5}, |
| (subcarrier spacing) |
| cyclicPrefix        ENUMERATED { extended } |
| (cyclic prefix) |
| } |

Of course, the above example is not limiting, and in addition to the configuration information given above, various parameters related to the bandwidth part may be configured for the UE. The base station may transfer the configuration information to the UE through higher layer signaling, for example, radio resource control (RRC) signaling. One configured bandwidth part or at least one bandwidth part among multiple configured bandwidth parts may be activated. Whether or not to activate a configured bandwidth part may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured via the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. In addition to receiving SIBs, the initial bandwidth part may also be used for other system information (OSI), paging, and random access.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given in Table 3, for example.

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part delay time type to the base station.

If the UE has received DCI including a bandwidth part change indicator in slot n, according to the requirements for the bandwidth part change delay time, the UE may complete a change to the new bandwidth part indicated by the bandwidth part change indicator at a timepoint not later than slot $n+T_{BWP}$, and the UE may transmit and/or receive a data channel scheduled by the corresponding DCI in the changed new bandwidth part. If the base station wants to schedule a data channel by using the new bandwidth part, the base station may determine time domain resource allocation regarding the data channel in consideration of the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI indicating a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: is a signal which becomes a reference of downlink time/frequency synchronization, and provides partial information of a cell ID.
- SSS: becomes a reference of downlink time/frequency synchronization, and provides the remaining cell ID information not provided by the PSS. Additionally, the SSS may serve as a reference signal for PBCH demodulation of a PBCH.
- PBCH: provides mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: An SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and SSS in the initial access step, and may decode the PBCH. The UE may obtain the MIB from the PBCH, and thus receive a configuration of control resource set (CORESET) #0 (which may correspond to a control resource set having a control resource set index of 0). The UE may perform monitoring with respect to control resource set #0, assuming that a demodulation reference signal (DMRS) transmitted in the control resource set #0 is quasi co-located (QCL) with the selected SS/PBCH block. The UE may receive system information by using downlink control information transmitted in the control resource set #0. The UE may obtain random access channel (RACH)-related configuration information necessary for the initial access from the received system information. The UE may transmit a physical RACH (PRACH) to the base station in consideration of the selected SS/PBCH index, and the base station that has received the PRACH may obtain information on the SS/PBCH block index selected by the UE. The base station may identify which block among the respective SS/PBCH blocks the UE has selected, and may identify the fact that control resource set #0 associated therewith is being monitored.

[PDCCH: Regarding DCI]

Next, downlink control information (DCI) in the 5G system will be described in detail.

In the 5G system, scheduling information regarding uplink data (or physical uplink shared channel (PUSCH)) or downlink data (or physical downlink shared channel (PDSCH)) is transferred from the base station to the UE through DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the DCI message payload, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI is not explicitly transmitted, but is transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| |
|---|
| - Identifier for DCI formats - [1] bit |
| - Frequency domain resource assignment - $\left[\left\lceil \log_2 \left( N_{RB}^{UL,BWP} \left( N_{RB}^{UL,BWP} + 1 \right) / 2 \right) \right\rceil\right]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| * For resource allocation type 0, $\left\lceil N_{RB}^{UL,BWP} / P \right\rceil$ bits |
| * For resource allocation type 1, $\left\lceil \log_2 \left( N_{RB}^{UL,BWP} \left( N_{RB}^{UL,BWP} + 1 \right) / 2 \right) \right\rceil$ bits |
| - Time domain resource assignment -1, 2, 3, or 4 bits |
| - Virtual resource block (VRB)-to-physical resource block (PRB) mapping - 0 or 1 bit, only for resource allocation type 1. |
| * 0 bit if only resource allocation type 0 is configured; |
| * 1 bit otherwise. |
| - Frequency hopping flag - 0 or 1 bit, only for resource allocation type 1. |
| * 0 bit if only resource allocation type 0 is configured; |
| * 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index- 1 or 2 bits |

(continued)

* 1 bit for semi-static HARQ-ACK codebook;

* 2 bits for dynamic HARQ-ACK codebook with single HARQ-ACK codebook.

- 2nd downlink assignment index - 0 or 2 bits

* 2 bits for dynamic HARQ-ACK codebook with two HARQ-ACK sub-codebooks;

* 0 bit otherwise.

- TPC command for scheduled PUSCH - 2 bits

- SRS resource indicator - $\left\lceil \log_2\left( \sum_{k=1}^{L_{max}} \binom{N_{SRS}}{k} \right) \right\rceil$ or $\lceil \log_2(N_{SRS}) \rceil$ bits

* $\left\lceil \log_2\left( \sum_{k=1}^{L_{max}} \binom{N_{SRS}}{k} \right) \right\rceil$ bits for non-codebook based PUSCH transmission;

* $\lceil \log_2(N_{SRS}) \rceil$ bits for codebook based PUSCH transmission.

- Precoding information and number of layers - up to 6 bits

- Antenna ports - up to 5 bits

- SRS request - 2 bits

- Channel state information (CSI) request - 0, 1, 2, 3, 4, 5, or 6 bits

- Code block group (CBG) transmission information - 0, 2, 4, 6, or 8 bits

- Phase tracking reference signal (PTRS)-demodulation reference signal (DDMRS) association - 0 or 2 bits.

- beta_offset indicator - 0 or 2 bits

- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit

- Frequency domain resource assignment - $\left\lceil \log_2(N_{RB}^{DL,BWP}(N_{RB}^{DL,BWP}+1)/2) \right\rceil$ ] bits

- Time domain resource assignment - X bits

- VRB-to-PRB mapping - 1 bit.

- Modulation and coding scheme - 5 bits

- New data indicator - 1 bit

- Redundancy version - 2 bits

- HARQ process number - 4 bits

- Downlink assignment index - 2 bits

- TPC command for scheduled PUCCH - [2] bits

- Physical uplink control channel (PUCCH) resource indicator - 3 bits

- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits

- Identifier for DCI formats - [1] bits

- Bandwidth part indicator - 0, 1 or 2 bits

(continued)

- Frequency domain resource assignment

* For resource allocation type 0, $\lceil N_{\mathrm{RB}}^{\mathrm{DL,BWP}} / P \rceil$ bits

* For resource allocation type 1, $\lceil \log_2 (N_{\mathrm{RB}}^{\mathrm{DL,BWP}} (N_{\mathrm{RB}}^{\mathrm{DL,BWP}} + 1) / 2) \rceil$ bits

- Time domain resource assignment -1, 2, 3, or 4 bits
- VRB-to-PRB mapping - 0 or 1 bit, only for resource allocation type 1.
* 0 bit if only resource allocation type 0 is configured;
* 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information - 0 or 1 bit
- DMRS sequence initialization - 1 bit

[PDCCH: CORESET, REG, CCE, and Search Space]

Hereinafter, a downlink control channel in a 5G communication system will be described in more detail with reference to the accompanying drawings.

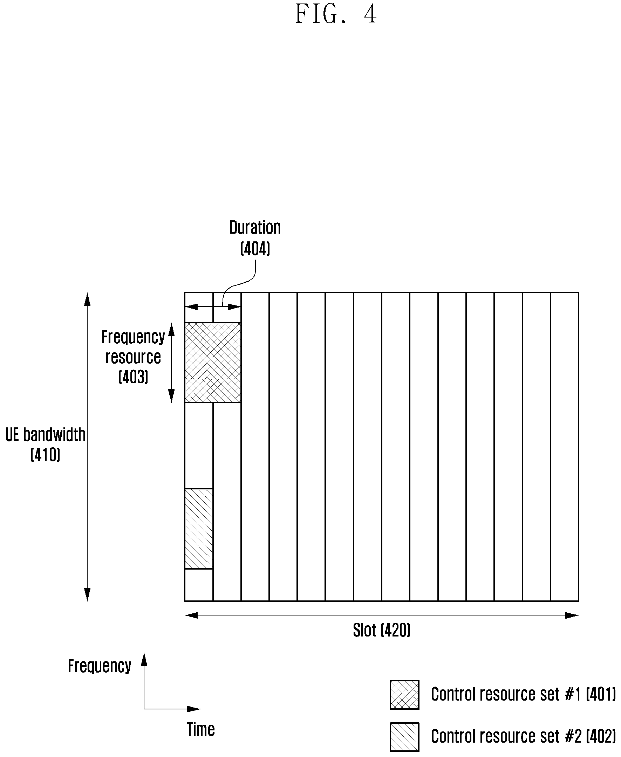

FIG. 4 illustrates an example of a control resource set (CORESET) used to transmit a downlink control channel in a 5G wireless communication system. FIG. 4 illustrates an example in which a UE bandwidth part 410 is configured along the frequency axis and two control resource sets (control resource set #1 401 and control resource set #2 402) are configured within one slot 520 along the time axis. The control resource sets 401 and 402 may be configured in a specific frequency resource 403 within the entire UE bandwidth part 410 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through higher layer signaling (e.g., system information, master information block (MIB), or radio resource control (RRC) signaling). The description that a control resource set is configured for a UE means that information including a control resource set identity, the control resource set's frequency location, and the control resource set's symbol duration is provided. For example, the control resource set may include the following pieces of information: as given in Table 8 below.

[Table 8]

```
ControlResourceSet ::=                SEQUENCE {
    -- Corresponds to L1 parameter 'CORESET-ID'
```

```
            controlResourceSetId              ControlResourceSetId,
            (control resource set identity))
frequencyDomainResources                      BIT STRING (SIZE (45)),
            (frequency domain resource assignment information)
duration                                       INTEGER
            (1..maxCoReSetDuration),
            (time domain resource assignment information )
cce-REG-MappingType                                 CHOICE {
            (CCE-to-REG mapping scheme)
            interleaved                             SEQUENCE {

                reg-BundleSize                      ENUMERATED   {n2,
            n3, n6},
                (REG bundle size)

                precoderGranularity                 ENUMERATED
            {sameAsREG-bundle, allContiguousRBs},

                interleaverSize                     ENUMERATED   {n2,
            n3, n6}
                (interleaver size)

            shiftIndex
            INTEGER(0..maxNrofPhysicalResourceBlocks-1)
            OPTIONAL
                (interleaver shift)
                },
            nonInterleaved                      NULL
            },
```

```
tci-StatesPDCCH                SEQUENCE(SIZE

    (1..maxNrofTCI-StatesPDCCH)) OF TCI-StateId

        OPTIONAL,

    (QCL configuration information)

tci-PresentInDCI                ENUMERATED {enabled}

            OPTIONAL,  -- Need S

}
```

In Table 8, tci-StatesPDCCH (simply referred to as transmission configuration indication (TCI) state) configuration information may include information on one or multiple synchronization signal (SS)/physical broadcast channel (PBCH) block (block) indices or channel state information reference signal (CSI-RS) indices that are in a quasi-co-located (QCL) relationship with the DMRS transmitted in a corresponding control resource set.

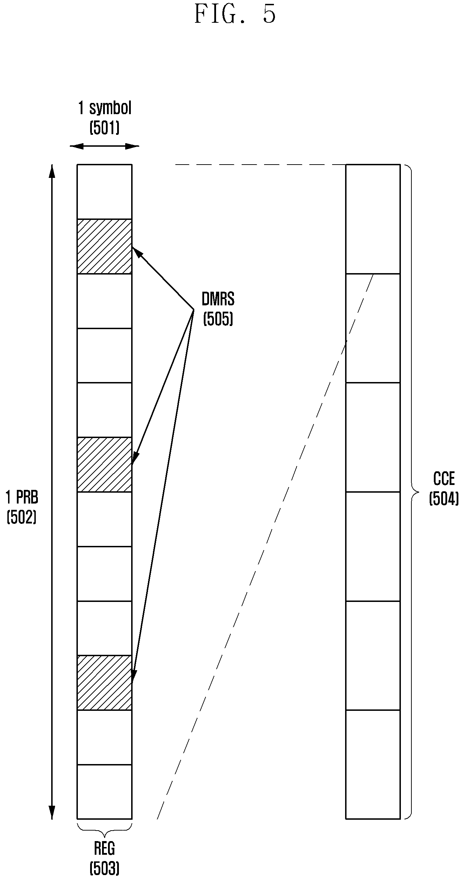

FIG. 5 illustrates an example of a basic unit of time and frequency resources constituting a downlink control channel available in 5G. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 403.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 505 may be transmitted inside one REG 503. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through higher layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the following pieces of information: as given in Table 9 below may be included.

[Table 9]

| |
|---|
| SearchSpace ::=                          SEQUENCE {<br><br>-- Identity of the search space. SearchSpaceId = 0 identifies the SearchSpace configured via PBCH (MIB) or ServingCellConfigCommon.<br><br>searchSpaceId                              SearchSpaceId,<br>  (search space identity)<br>controlResourceSetId                       ControlResourceSetId,<br>  (control resource set identity)<br>monitoringSlotPeriodicityAndOffset     CHOICE { |

```
        (monitoring slot level periodicity)
        sl1                              NULL,
        sl2                              INTEGER (0..1),
        sl4                              INTEGER (0..3),
        sl5                          INTEGER (0..4),
        sl8                              INTEGER (0..7),
        sl10                         INTEGER (0..9),
        sl16                         INTEGER (0..15),
        sl20                         INTEGER (0..19)
    }
        OPTIONAL,
    duration(monitoring  duration)                      INTEGER
    (2..2559)
monitoringSymbolsWithinSlot              BIT      STRING
    (SIZE (14))        OPTIONAL,
    (monitoring symbols within slot)
nrofCandidates                    SEQUENCE {
    (number of PDCCH candidates for each aggregation level)
        aggregationLevel1            ENUMERATED  {n0,  n1,
    n2, n3, n4, n5, n6, n8},
        aggregationLevel2            ENUMERATED  {n0,  n1,
    n2, n3, n4, n5, n6, n8},
        aggregationLevel4            ENUMERATED  {n0,  n1,
    n2, n3, n4, n5, n6, n8},
        aggregationLevel8            ENUMERATED  {n0,  n1,
    n2, n3, n4, n5, n6, n8},
        aggregationLevel16           ENUMERATED  {n0,  n1,
    n2, n3, n4, n5, n6, n8}
    },
```

```
searchSpaceType                        CHOICE {
(search space type)
    -- Configures this search space as common search space (CSS) and
    DCI formats to monitor.
    common                             SEQUENCE {
(common search space)
        }
    ue-Specific                        SEQUENCE {
(UE-specific search space)
        -- Indicates whether the UE monitors in this USS for DCI
    formats 0-0 and 1-0 or for formats 0-1 and 1-1.
        formats                        ENUMERATED
    {formats0-0-And-1-0, formats0-1-And-1-1},
        ...
        }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below
Cell RNTI (C-RNTI): used to schedule a UE-specific PDSCH
Temporary cell RNTI (TC-RNTI): used to schedule a UE-specific PDSCH

Configured scheduling RNTI (CS-RNTI): used to schedule a semi-statically configured UE-specific PDSCH

Random access RNTI (RA-RNTI): used to schedule a PDSCH in a random access step

Paging RNTI (P-RNTI): used to schedule a PDSCH in which paging is transmitted

System information RNTI (SI-RNTI): used to schedule a PDSCH in which system information is transmitted

Interruption RNTI (INT-RNTI): used to indicate whether a PDSCH is punctured

Transmit power control for PUSCH RNTI (TPC-PUSCH-RNTI): used to indicate a power control command regarding a PUSCH

Transmit power control for PUCCH RNTI (TPC-PUCCH-RNTI): used to indicate a power control command regarding a PUCCH

Transmit power control for SRS RNTI (TPC-SRS-RNTI): used to indicate a power control command regarding an SRS

The DCI formats enumerated above may follow the definitions given in Table 10 below, for example.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- *L*: aggregation level
- $n_{CI}$: carrier index
- $N_{CCE,p}$: total number of CCEs existing in control resource set *p*
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L
- *i* = 0, ..., *L* -1
- $Y_{p,n_{s,f}^{\mu}} = \left( A_p \cdot Y_{p,n_{s,f}^{\mu}-1} \right) mod D$ , $Y_{p,-1} = n_{RNTI} \neq 0$, $A_p = 39827$ *for pmod3 = 0* , $A_p = 39829$ *for pmod3 = 1* , $A_p = 39839$ *for pmod3 = 2, D = 65537*
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 2), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

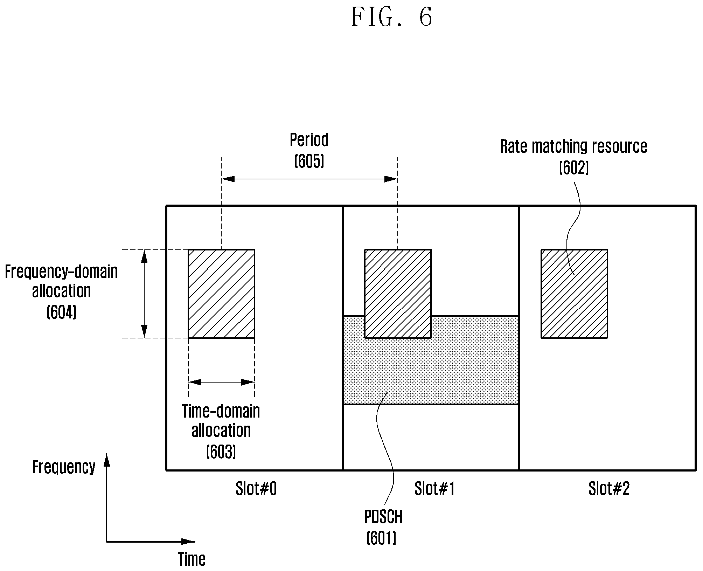

FIG. 6 illustrates a method in which a base station and a UE transmit/receive data in consideration of a downlink data channel and a rate matching resource.in a wireless communication system according to an embodiment of the disclosure.

FIG. 6 illustrates a downlink data channel (PDSCH) 601 and a rate matching resource 602. The base station may configure one or multiple rate matching resources 602 for the UE through higher layer signaling (e.g., RRC signaling). Rate matching resource 602 configuration information may include time-domain resource allocation information 603, frequency-domain resource allocation information 604, and periodicity information 605. A bitmap corresponding to the frequency-domain resource allocation information 604 will hereinafter be referred to as "first bitmap", a bitmap corresponding to the time-domain resource allocation information 603 will be referred to as "second bitmap", and a bitmap corresponding to the periodicity information 605 will be referred to as "third bitmap". If all or some of time and frequency resources of the scheduled PDSCH 601 overlap a configured rate matching resource 602, the base station may rate-match and transmit the PDSCH 602 in a rate matching resource 601 part, and the UE may perform reception and decoding after assuming that the PDSCH 602 has been rate-matched in a rate matching resource 601 part.

[PDSCH/PUSCH: Regarding frequency resource allocation]

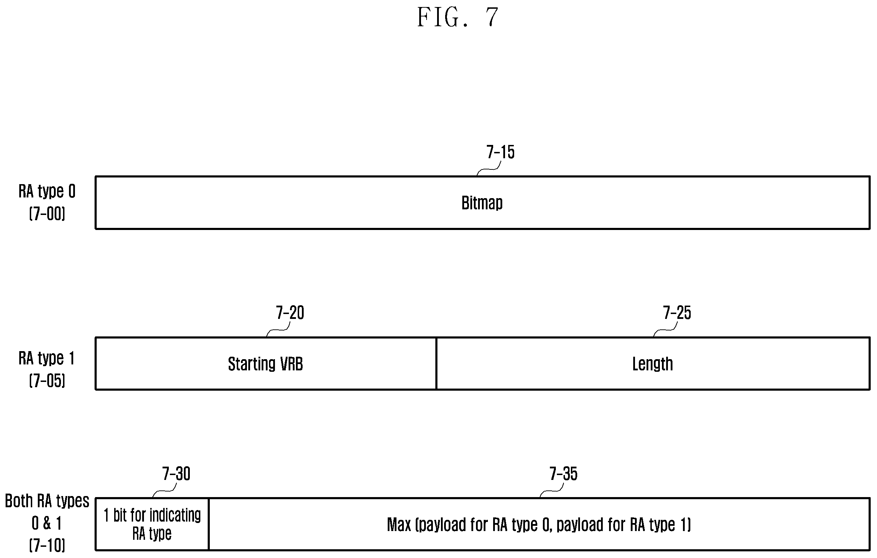

FIG. 7 illustrates an example of frequency domain resource allocation with regard to a physical downlink shared channel (PDSCH) or a physical uplink shared channel (PUSCH) in a wireless communication system according to an embodiment of the disclosure.

FIG. 7 illustrates three frequency domain resource allocation methods of type 0 7-00, type 1 7-05, and dynamic switch 7=810, which are configurable through a higher layer in an NR wireless communication system.

Referring to FIG. 7, if the UE is configured to use only type-0 resource allocation through higher layer signaling (7-00), partial downlink control information (DCI) for allocating a PDSCH/PUSCH to the corresponding UE includes a bitmap configured by $N_{RBG}$ bits. As used herein, $N_{RBG}$ refers to the number of resource block groups (RBGs) determined according to the size of the bandwidth part indicated by the bandwidth part indicator and higher layer parameter rbg-Size, as in Table 11 below, and data is transmitted in the RBG marked as 1 by the bitmap.

[Table 11]

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

The size of a BWP may refer to the number of RBs that the BWP includes. More specifically, if type-0 resource allocation is indicated to a UE, the length of the FDRA field of the DCI received by the UE is equal to the number of RBGs ($N_{RBG}$) within the bandwidth part, and $N_{RBG} = \left\lceil (N_{BWP}^{size} + (N_{BWP}^{start} \bmod P))/P \right\rceil$ . The first RBG in the bandwidth part includes as many RBs as $\text{RBG}_0^{size} = P - N_{BWP}^{size} \bmod P$ , and the last RBG in the bandwidth part includes as many RBs as $\text{RBG}_{last}^{size} = \left( N_{BWP}^{start} + N_{BWP}^{size} \right) \bmod P$ if $\left( N_{BWP}^{start} + N_{BWP}^{size} \right) \bmod P > 0$ , and includes as many RBs as $\text{RBG}_{last}^{size} = P$ otherwise. The other RBGs include P RBs. Here, P is the number of nominal RBGs determined according to Table 11 above.

If the UE is configured to use only type-1 through higher-layer signaling (7-05), the DCI for allocating a PDSCH or a PUSCH to the UE includes frequency domain resource allocation (FDRA) information configured by as many bits as

$$\left\lceil \log_2(N_{RB}^{BWP} * (N_{RB}^{BWP} + 1)/2) \right\rceil$$ . Here, $N_{RB}^{BWP}$ refers to the number of RBs included in the bandwidth part.

The base station may thereby configure a starting VRB 7-20 and the length 7-25 of a frequency domain resource allocated continuously therefrom.

If the UE is configured to use both type-0 resource allocation and type-1 resource allocation through higher layer signaling (7-10), partial DCI for allocating a PDSCH/PUSCH to the corresponding UE includes frequency domain resource allocation information including as many bits as the larger value 7-35 among the payload 7-15 for configuring type-0 resource allocation and the payload 7-20 and 7-25 for configuring type-1 resource allocation. The conditions for this will be described again later. One bit may be added to the foremost part (MSB) of the frequency domain resource allocation information within the DCI, the corresponding bit having a value of "0" may indicate use of type-0 resource allocationtype-0, and the corresponding bit having a value of "1" may indicate use of type-1 resource allocation.

[PDSCH/PUSCH: Regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 12 or Table 13 below may be transmitted from the base station to the UE.

[Table 12]

| *PDSCH-TimeDomainResourceAllocationList information element* |
|---|
| PDSCH-TimeDomainResourceAllocationList    ::=    SEQUENCE (SIZE(1..maxNrofDL-Allocations))    OF    PDSCH-TimeDomainResourceAllocation |
| PDSCH-TimeDomainResourceAllocation ::=    SEQUENCE { |
|     k0    INTEGER(0..32) OPTIONAL,    -- Need S |
|        (PDCCH-to-PDSCH timing, slot unit) |
| mappingType    ENUMERATED {typeA, typeB}, |
|        (PDSCH mapping type) |
| startSymbolAndLength    INTEGER (0..127) |
| (start symbol and length of PDSCH) |
| } |

[196]    [Table 13]

[197]

| PUSCH-TimeDomainResourceAllocation information element |
| --- |
| PUSCH-TimeDomainResourceAllocationList ::=   SEQUENCE (SIZE(1..maxNrofUL-Allocations))            OF          PUSCH-TimeDomainResourceAllocation |

| PUSCH-TimeDomainResourceAllocation ::=   SEQUENCE { |
| --- |
| k2                                              INTEGER(0..32) OPTIONAL,    -- Need S |
| (PDCCH-to-PUSCH timing, slot unit) |
| mappingType                                ENUMERATED {typeA, typeB}, |
| (PUSCH mapping type) |
| startSymbolAndLength                       INTEGER (0..127) |
| (start symbol and length of PUSCH) |
| } |

The base station may notify the UF of one of the entries of the table regarding time domain resource allocation information described above through L1 signaling (e.g., DCI) (for example, "time domain resource allocation" field in DCI may indicate the same). The UE may acquire time domain resource assignment information regarding a PDSCH or PUSCH, based on the DCI acquired from the base station.

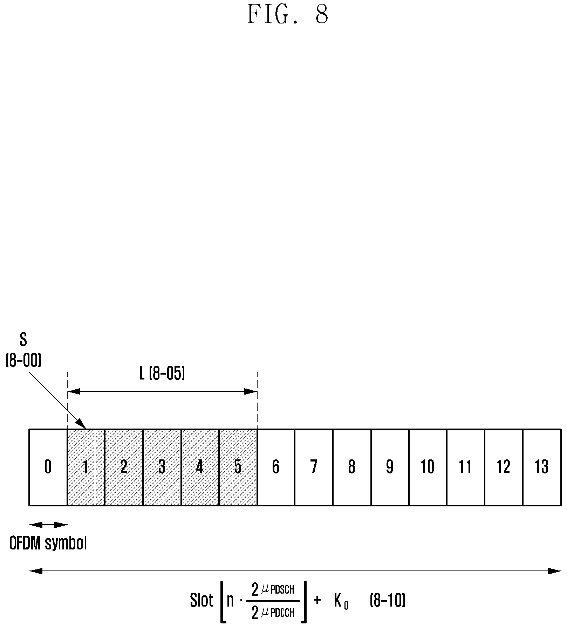

FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) ($\mu_{PDSCH}$, $\mu_{PDCCH}$) of a data channel and a control channel configured by using a higher layer, the scheduling offset (K0) value, and the OFDM symbol start location 8-00 and length 8-05 within one slot dynamically indicated through DCI.

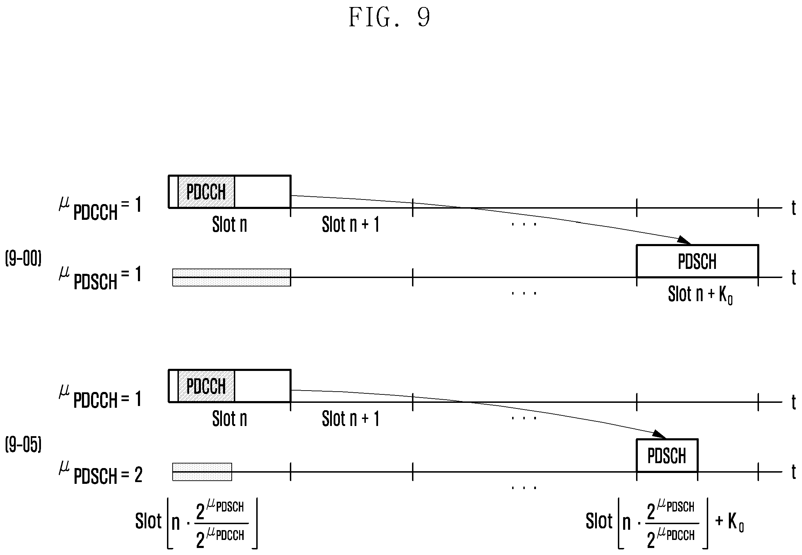

FIG. 9 illustrates an example of time-domain resource allocation according to subcarrier spacings with regard to a data channel and a control channel in a wireless communication system according to an embodiment of the disclosure.

Referring to FIG. 9, if the data channel and the control channel have the same subcarrier spacing (9-00, $\mu_{PDSCH}$ = $\mu_{PDCCH}$), the slot number for data and that for control are identical, and the base station and the UE may accordingly generate a scheduling offset in conformity with a predetermined slot offset K0. To the contrary, if the data channel and the control channel have different subcarrier spacings (9-05, $\mu_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

[PUSCH: Regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 16 through higher signaling, without receiving a UL grant inside DCI.

**EP 4 787 753 A1**

Configured grant Type 2 PUSCH transmission may be scheduled semi-persistently by a UL grant inside DCI after receiving configuredGrantConfig not including rrc-ConfiguredUplinkGrant in Table 14 through higher signaling. If PUSCH transmission is operated by a configured grant, parameters applied to the PUSCH transmission are applied through configuredGrantConfig (higher signaling) in Table 14 except for dataScramblingIdentityPUSCH, txConfig, codebookSubset, maxRank, and scaling of UCI-OnPUSCH, which are provided by pusch-Config (higher signaling) in Table 15. If provided with transformPrecoder inside configuredGrantConfig (higher signaling) in Table 14, the UE applies tp-pi2BPSK inside pusch-Config in Table 15 to PUSCH transmission operated by a configured grant.

[Table 14]

| ConfiguredGrantConfig ::= | SEQUENCE { |
| --- | --- |
| frequencyHopping | ENUMERATED {intraSlot, interSlot} OPTIONAL, -- Need S, |
| cg-DMRS-Configuration | DMRS-UplinkConfig, |
| mcs-Table | ENUMERATED {qam256, qam64LowSE} OPTIONAL, -- Need S |
| mcs-TableTransformPrecoder | ENUMERATED {qam256, qam64LowSE} OPTIONAL, -- Need S |
| uci-OnPUSCH | SetupRelease { CG-UCI-OnPUSCH } OPTIONAL, -- Need M |
| resourceAllocation | ENUMERATED { resourceAllocationType0, resourceAllocationType1, dynamicSwitch }, |
| rbg-Size | ENUMERATED {config2} OPTIONAL, -- Need S |
| powerControlLoopToUse | ENUMERATED {n0, n1}, |
| p0-PUSCH-Alpha | P0-PUSCH-AlphaSetId, |
| transformPrecoder | ENUMERATED {enabled, disabled} OPTIONAL, -- Need S |
| nrofHARQ-Processes | INTEGER(1..16), |

25

```
        repK                                    ENUMERATED  {n1, n2,
n4, n8},
        repK-RV                                 ENUMERATED  {s1-0231,
s2-0303, s3-0000}                                          OPTIONAL,
-- Need R
        periodicity                        ENUMERATED {
                                              sym2,        sym7,
sym1x14, sym2x14, sym4x14, sym5x14, sym8x14, sym10x14, sym16x14,
sym20x14,
                                                 sym32x14,
sym40x14, sym64x14, sym80x14, sym128x14, sym160x14, sym256x14,
sym320x14, sym512x14,
                                                 sym640x14,
sym1024x14, sym1280x14, sym2560x14, sym5120x14,
                                              sym6,   sym1x12,
sym2x12, sym4x12, sym5x12, sym8x12, sym10x12, sym16x12, sym20x12,
sym32x12,
                                                 sym40x12,
sym64x12, sym80x12, sym128x12, sym160x12, sym256x12, sym320x12,
sym512x12, sym640x12,
                                                 sym1280x12,
sym2560x12
        },
        configuredGrantTimer                 INTEGER  (1..64)
OPTIONAL,    -- Need R
        rrc-ConfiguredUplinkGrant           SEQUENCE {
            timeDomainOffset                        INTEGER
(0..5119),
```

```
                timeDomainAllocation                           INTEGER
(0..15),
                frequencyDomainAllocation                    BIT  STRING
(SIZE(18)),
                antennaPort                              INTEGER (0..31),
                dmrs-SeqInitialization                    INTEGER  (0..1)
OPTIONAL,    -- Need R
                precodingAndNumberOfLayers                INTEGER (0..63),
                srs-ResourceIndicator                     INTEGER  (0..15)
OPTIONAL,    -- Need R
                mcsAndTBS                                       INTEGER
(0..31),
                frequencyHoppingOffset                     INTEGER  (1..
maxNrofPhysicalResourceBlocks-1)              OPTIONAL,    -
- Need R
                pathlossReferenceIndex                          INTEGER
(0..maxNrofPUSCH-PathlossReferenceRSs-1),

                ...
         }
OPTIONAL,     -- Need R

         ...

}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 15, which is higher signaling, is "codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 15, the UE does not expect scheduling through DCI format 0_1.

[Table 15]

| | |
|---|---|
| PUSCH-Config ::= | SEQUENCE { |
| dataScramblingIdentityPUSCH | INTEGER (0..1023) |
| OPTIONAL, -- Need S | |
| txConfig | ENUMERATED |
| {codebook, | nonCodebook} |
| OPTIONAL, -- Need S | |
| dmrs-UplinkForPUSCH-MappingTypeA | SetupRelease |
| { DMRS-UplinkConfig | } |
| OPTIONAL, -- Need M | |
| dmrs-UplinkForPUSCH-MappingTypeB | SetupRelease |
| { DMRS-UplinkConfig | } |
| OPTIONAL, -- Need M | |

```
        pusch-PowerControl                          PUSCH-PowerControl
OPTIONAL,      -- Need M
        frequencyHopping                               ENUMERATED
{intraSlot, interSlot}                                    OPTIONAL,
-- Need S
        frequencyHoppingOffsetLists          SEQUENCE (SIZE (1..4))
OF INTEGER (1.. maxNrofPhysicalResourceBlocks-1)


OPTIONAL,      -- Need M
        resourceAllocation                             ENUMERATED
{ resourceAllocationType0, resourceAllocationType1, dynamicSwitch},
        pusch-TimeDomainAllocationList           SetupRelease { PUSCH-
TimeDomainResourceAllocationList }                  OPTIONAL,       --
Need M
        pusch-AggregationFactor                 ENUMERATED { n2, n4,
n8 }                                                OPTIONAL,       --
Need S
        mcs-Table                                      ENUMERATED
{qam256,                                                  qam64LowSE}
OPTIONAL,      -- Need S
        mcs-TableTransformPrecoder                     ENUMERATED
{qam256,                                                  qam64LowSE}
OPTIONAL,      -- Need S
        transformPrecoder                              ENUMERATED
{enabled,                                                   disabled}
OPTIONAL,      -- Need S
        codebookSubset                                 ENUMERATED
{fullyAndPartialAndNonCoherent, partialAndNonCoherent,nonCoherent}
```

```
OPTIONAL, -- Cond codebookBased
      maxRank                                    INTEGER  (1..4)
OPTIONAL, -- Cond codebookBased
      rbg-Size                                   ENUMERATED
{ config2}                                       OPTIONAL, -- Need
S
      uci-OnPUSCH                                SetupRelease { UCI-
OnPUSCH}                                         OPTIONAL, -- Need M
      tp-pi2BPSK                                 ENUMERATED
{enabled}                                        OPTIONAL, --
Need S

      ...

}
```

Next, codebook-based PUSCH transmission will be described. Codebook-based PUSCH transmission may be dynamically scheduled through DCI format 0_0 or 0_1, and may operate semi-statically by a configured grant. If codebook-based PUSCH is dynamically scheduled by DCI format 0_1 or semi-statically configured by a configured grant, the UE determines a precoder for PUSCH transmission, based on an SRS resource indicator (SRI), a transmission precoding matrix indicator (TPMI), and a transmission rank (the number of PUSCH transmission layers).

In this case, the SRI may be given through the SRS resource indicator in DCI or configured through srs-ResourceIndicator which is higher signaling. When transmitting codebook-based PUSCH, the UE may be configured with at least one SRS resource, and may be configured with up to two. When the UE is provided with an SRI through DCI, the SRS resource indicated by the corresponding SRI refers to an SRS resource corresponding to the SRI among SRS resources transmitted prior to a PDCCH including the SRI. In addition, the TPMI and transmission rank may be given through field precoding information and number of layers in DCI or configured through precodingAndNumberOfLayers which is higher signaling. The TPMI is used to indicate a precoder applied to PUSCH transmission. If the UE is configured with one SRS resource, the TPMI is used to indicate a precoder to be applied in the configured one SRS resource. If the UE is configured with multiple SRS resources, the TPMI is used to indicate a precoder to be applied in the SRS resource indicated through the SRI.

The precoder used for PUSCH transmission is selected from an uplink codebook having the same number of antenna ports as the nrofSRS-Ports value inside SRS-Config which is higher signaling. In codebook-based PUSCH transmission, the UE determines a codebook subset based on a TPMI and codebookSubset inside pusch-Config which is higher signaling. The codebookSubset inside pusch-Config, which is higher signaling, may be configured with one of "fullyAndPartialAndNonCoherent", "partialAndNonCoherent", or "nonCoherent" based on UE capability reported to the base station by the UE. If the UE has reported 'partialAndNonCoherent' as the UE capability, the UE does not expect that the value of codebookSubset, which is higher signaling, is configured as 'fullyAndPartialAndNonCoherent'. In addition, if the UE has reported "nonCoherent" as the UE capability, the UE does not expect that the value of codebookSubset, which is higher signaling, is configured as "fullyAndPartialAndNonCoherent" or "partialAndNonCoherent". If nrofSRS-Ports in SRS-ResourceSet, which is higher signaling, indicates two SRS antenna ports, the UE does not expect that the value of codebookSubset, which is higher signaling, is configured as "partialAndNonCoherent".

The UE may be configured with one SRS resource set in which the value of usage in SRS-ResourceSet, which is higher signaling, is configured as "codebook", and one SRS resource may be indicated through the SRI in the corresponding SRS resource set. If multiple SRS resources are configured in the SRS resource set in which the value of the usage in SRS-ResourceSet, which is higher signaling, is configured as "codebook", the UE expects that the value of nrofSRS-Ports in SRS-Resource, which is higher signaling, is configured to be the same for all SRS resources.

The UE transmits one or multiple SRS resources included in the SRS resource set in which the value of usage is configured as "codebook" according to higher signaling to the base station, and the base station indicates that the UE may perform PUSCH transmission by using transmission beam information of the selected one SRS resource among SRS resources transmitted by the UE. In this case, in codebook-based PUSCH transmission, the SRI is used as information for selecting an index of one SRS resource and is included in DCI. Additionally, the base station may include, in DCI, information for indicating a TPMI and a rank to be used by the UE for PUSCH transmission. The UE performs PUSCH transmission by applying the precoder indicated by the rank and TPMI indicated based on the transmission beam of the corresponding SRS resource, by using the SRS resource indicated by the SRI.

Next, non-codebook-based PUSCH transmission will be described. The non-codebook-based PUSCH transmission may be dynamically scheduled through DCI format 0_0 or 0_1, and may be semi-statically operated by a configured grant. If at least one SRS resource is configured inside an SRS resource set wherein the value of usage inside SRS-ResourceSet (higher signaling) is "nonCodebook", non-codebook-based PUSCH transmission may be scheduled for the UE through DCI format 0_1.

With regard to the SRS resource set wherein the value of usage inside SRS-ResourceSet (higher signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (higher signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (higher signaling). With regard to non-codebook-based transmission, the UE does not expect that spatialRelationInfo which is higher signaling regarding the SRS resource and associatedCSI-RS inside SRS-ResourceSet (higher signaling) will be configured together.

If the UE is configured with multiple SRS resources, the UE may determine a precoder and a transmission rank to be applied to PUSCH transmission, based on an SRI indicated by the base station. In this case, the SRI may be indicated through a field SRS resource indicator in DCI or configured through srs-ResourceIndicator which is higher signaling. Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that may be simultaneously transmitted in the same symbol within one SRS resource set and the maximum number of SRS resources is determined by the UE capability reported by the UE to the base station. In this case, SRS resources simultaneously transmitted by the UE occupy the same RB. The UE configures one SRS port for each SRS resource. The SRS resource set in which the value of usage in SRS-ResourceSet, which is higher signaling, is configured as "nonCodebook" may be configured with only one, and the SRS resource for non-codebook-based PUSCH transmission may be configured with up to four.

The base station transmits one NZP-CSI-RS connected to the SRS resource set to the UE, and the UE calculates a precoder to be used for transmission of one or multiple SRS resources inside the corresponding SRS resource set, based on the result of measurement when the corresponding NZP-CSI-RS is received. When the UE transmits one or multiple SRS resources in the SRS resource set in which usage is configured as "nonCodebook" to the base station, the UE applies the calculated precoder, and the base station selects one or multiple SRS resources from the received one or multiple SRS resources. In this case, the SRI in non-codebook-based PUSCH transmission indicates an index that may express a combination of one or multiple SRS resources, and the SRI is included in DCI. In this case, the number of SRS resources indicated by the SRI transmitted by the base station may be the same as the number of transmission layers of the PUSCH, and the UE transmits the PUSCH by applying a precoder applied to SRS resource transmission to each layer.

[Regarding CA/DC]

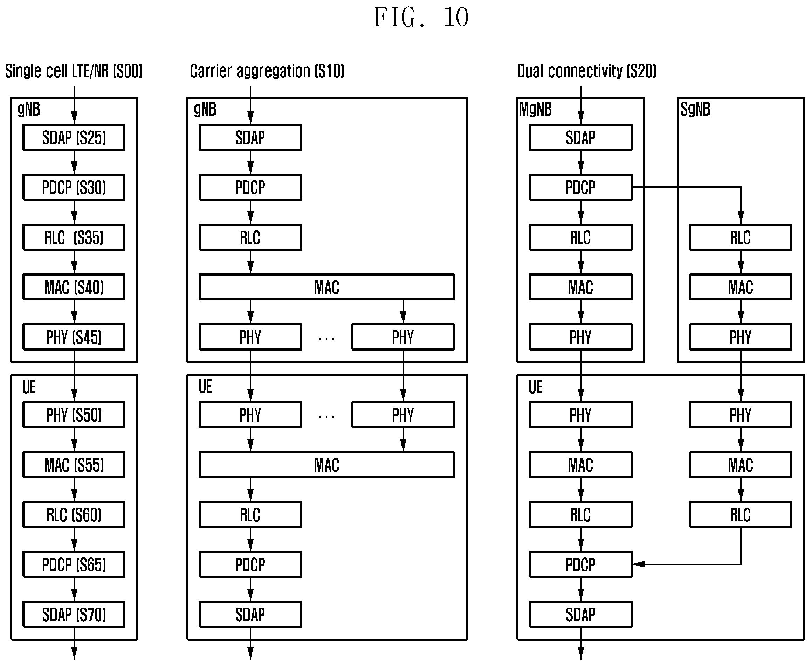

FIG. 10 illustrates radio protocol structures of a base station and a UE in single cell, carrier aggregation, and dual connectivity situations according to an embodiment of the disclosure.

Referring to FIG. 10, a radio protocol of a next-generation mobile communication system includes an NR service data adaptation protocol (SDAP) S25 or S70, an NR packet data convergence protocol (PDCP) S30 or S65, an NR radio link control (RLC) S35 or S60, and an NR medium access control (MAC) S40 or S55 on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured by an RRC message whether to use the header of the SDAP layer device or the function of the SDAP layer device for each PDCP layer device, bearer, or logical channel, and if the SDAP header is configured, the NAS QoS reflective configuration 1-bit indicator (NAS reflective QoS) and the AS QoS reflective configuration 1-bit indicator (AS reflective QoS) in the SDAP header may indicate the UE to update or reconfigure the mapping information for the QoS flow and data bearer of the uplink and downlink. The SDAP header may include QoS flow ID information indicating QoS. The QoS information may be used as data processing priority, scheduling information, etc. for supporting a smooth service.

The main functions of the NR PDCP S30 or S65 may include some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above functions, the reordering of the NR PDCP device described above refers to a function for reordering PDCP PDUs received from a lower layer in sequence based on a PDCP sequence number (SN), and may include a function for delivering data in the re-ordered sequence to an upper layer. Alternatively, the reordering of the NR PDCP device may include a function of directly transferring without considering the sequence, a function of reordering the sequence and recording lost PDCP PDUs, a function of reporting the state of the lost PDCP PDUs to the transmission side, and a function of requesting retransmission of the lost PDCP PDUs.

The main functions of the NR RLC S35 or S60 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above functions, the in-sequence delivery of the NR RLC device refers to a function of delivering RLC SDUs received from a lower layer to an upper layer in sequence. The in-sequence delivery of the NR RLC device may include a function of reassembling and delivering multiple RLC SDUs which have been segmented from a single RLC SDU and received, a function of reordering received RLC PDUs based on an RLC sequence number (SN) or a PDCP sequence number (SN), a function of recording lost RLC PDUs by reordering the sequence, a function of reporting the state of the lost RLC PDUs to a transmission side, and a function of requesting retransmission of the lost RLC PDUs. The in-sequence delivery of the NR RLC device may include a function of, if there is a lost RLC SDU, successively delivering only RLC SDUs before the lost RLC SDU to the upper layer, or may include a function of, if a predetermined timer has expired although there is a lost RLC SDU, successively delivering all RLC SDUs received before the timer was started to the upper layer.

Alternatively, the in-sequence delivery of the NR RLC device may include a function of delivering all the RLC SDUs received to date to the upper layer in sequence if a predetermined timer is expired although there is a lost RLC SDU. In addition, the RLC PDUs may be processed in the order in which they are received (in the order of arrival, regardless of the order of the sequence number) and then delivered to the PDCP device out of sequence (out-of-sequence delivery), and in the case of the segment, the segments stored in a buffer or segments to be received later may be received, and then reconstructed into one complete RLC PDU, processed, and delivered to the PDCP device. The NR RLC layer may not include a concatenation function, and the function may be performed in the NR MAC layer or replaced with a multiplexing function of the NR MAC layer.

In the above functions, the out-of-sequence delivery of the NR RLC device refers to a function of directly delivering RLC SDUs received from the lower layer to the higher layer regardless of the sequence, and may include a function of reassembling and delivering RLC SDUs that have been divided from one RLC SDU into multiple RLC SDUs, and may include a function of storing RLC SNs or PDCP SNs of the received RLC PDUs, sorting the sequence, and recording lost RLC PDUs.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer S45 or S50 may perform operations of channel-coding and modulating higher layer data, generating OFDM symbols and transmitting the same through a radio channel, or demodulating OFDM symbols received through a radio channel, channel-decoding the same, and delivering the same to the higher layer.

The radio protocol structure may be variously changed in detail depending on the carrier (or cell) operation method. For example, when the base station transmits data to the UE based on a single carrier (or cell), the base station and the UE use a protocol structure having a single structure for each layer, as shown in S00. Contrarily, when the base station transmits data to the UE based on carrier aggregation (CA) in which multiple carriers are used in a single TRP, the base station and the UE have a single structure up to RLC, but use a protocol structure that multiplexes the PHY layer through the MAC layer as shown in S10. As another example, when the base station transmits data to the UE based on dual connectivity (DC) in which multiple carriers are used in multiple TRPs, the base station and the UE have a single structure up to RLC, but use a protocol structure that multiplexes the PHY layer through the MAC layer as shown in S20.

Referring to the above-described PDCCH and beam configuration-related descriptions, since PDCCH repeated transmission is not supported in current Rel-15 and Rel-16 NR, it is difficult to achieve the required reliability in scenarios in which high reliability is needed, such as URLLC. The disclosure may improve the PDCCH reception reliability of a UE by providing a PDCCH repetitive transmission method through multiple transmission points (TRPs). Specific methods will be specifically described in the following embodiments.

Hereinafter, the embodiments of the disclosure will be described in detail in conjunction with the accompanying drawings. The details of the disclosure are applicable to FDD and TDD systems. As used hereinafter, higher signaling (or higher layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

As used hereinafter, the UE may use various methods, in determining whether cooperative communication is applied, in which the PDCCH(s) that allocate a PDSCH to which cooperative communication is applied having a specific format, the PDCCH(s) that allocate the PDSCH to which cooperative communication is applied include a specific indicator indicating whether cooperative communication is applied, the PDCCH(s) that allocate the PDSCH to which cooperative communication is applied are scrambled with a specific RNTI, or cooperative communication is assumed to be applied in a specific section indicated by a higher layer. Hereinafter, for the sake of descriptive convenience, the reception of a PDSCH to which cooperative communication is applied, based on conditions similar to those described above, will be referred to as an NC-JT case.

As used hereinafter, determining a priority between A and B may refer to various operations such as selecting one having a higher priority according to a predetermined priority rule and performing an operation corresponding to the selected one, omitting or dropping an operation corresponding to one having a lower priority, and the like.

As used hereinafter, the above-described examples may described through a number of embodiments, but the above-described examples are not independent of each other, and one or more embodiments may be applied simultaneously or in combination.

Hereinafter, embodiments of the disclosure will be described in detail in conjunction with the accompanying drawings. In the following description, a base station is an entity that allocates resources to terminals, and may be at least one of a gNode B, a gNB, an eNode B, a Node B, a base station (BS), a wireless access unit, a base station controller, or a node on a network. A terminal may include a user equipment (UE), a mobile station (MS), a cellular phone, a smartphone, a computer, or a multimedia system capable of performing communication functions. In the following description of embodiments of the disclosure, the 5G system will be described by way of example, but the embodiments of the disclosure may also be applied to other communication systems having similar technical backgrounds or channel types. For example, such communication systems may include mobile communication technology such as LTE or LTE-A, and mobile communication technology developed beyond 5G. Therefore, based on determination by those skilled in the art, the embodiments of the disclosure may also be applied to other communication systems through some modifications without departing from the scope of the disclosure. The details of the disclosure are applicable to FDD and TDD systems.

Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Accordingly, the definitions thereof should be made based on the contents throughout the specification.

In the following description of the disclosure, higher layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channel or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

As used hereinafter, determining a priority between A and B may refer to various operations such as selecting one having a higher priority according to a pre-determined priority rule and performing an operation corresponding to the selected one, omitting or dropping an operation corresponding to one having a lower priority, and the like.

As used hereinafter, the above-described examples may described through a number of embodiments, but the above-described examples are not independent of each other, and one or more embodiments may be applied simultaneously or in combination.

[Regarding CG-DFI]

The base station may provide, to the UE, a reception result for a transport block (TB) transmitted by the UE through a physical uplink shared channel (PUSCH) by using at least one DCI format. For example, the base station may provide, to the UE, a reception result for the transport block included in the PUSCH or hybrid automatic repeat request acknowledgement (HARQ-ACK) information by using DCI format 0_1 of a 5G system. The DCI may include at least a reception result for a transport block transmitted by the UE through configured grant PUSCH transmission. The DCI may include a reception result for all transport blocks transmitted by the UE through configured grant PUSCH transmission or a dynamic grant PUSCH. In this case, in the disclosure, a description will be given by using DCI format 0_1 for convenience of description, but DCI format 0_1 is only an example, and another DCI format may also be used.

Configured grant PUSCH transmission refers to periodically transmitting a PUSCH according to a configuration of the base station. The configured grant PUSCH may be activated by an upper layer or may be activated through a DCI format having a CRC scrambled with a CS-RNTI. Dynamic grant PUSCH transmission refers to a PUSCH scheduled through a DCI format having a CRC scrambled with a C-RNTI or an MCS-C-RNTI.

Here, DCI format 0_1 is a DCI format that may be used as non-fallback DCI scheduling one or multiple PUSCHs for the UE or may be used to indicate configured grant downlink feedback information (CG-DFI). A CRC of DCI format 0_1 may be scrambled by at least one RNTI among a cell (C)-RNTI, a configured scheduling (CS)-RNTI, a modulation coding scheme (MCS)-C-RNTI, and a semi-persistent (SP)-CSI-RNTI.

DCI format 0_1 is used to indicate CG-DFI in the following case.

When DCI format 0_1 is a DCI format for a cell operating in an unlicensed band (or shared spectrum), a DCI format 0_1 having a CRC scrambled with a CS-RNTI, may include a DFI flag field. In this case, a UE having received the DCI may, when a value of the DFI flag field is 0, determine that the DCI is DCI for activating a second uplink transmission and reception scheme or a second uplink transmission resource (or DCI scheduling a PUSCH) and, when the value of the field is 1, determine that the DCI is DCI indicating CG-DFI.

If DCI format 0_1 is used to indicate CG-DFI, DCI format 0_1 may be configured as follows.

- Control information format identifier (Identifier for DCI formats): An identifier of a 1-bit field for identifying a DCI format. For example, through the 1-bit identifier, a UE having received the DCI may, when a value of the identifier is 0, identify the DCI as a UL DCI format (e.g., DCI format 0_1) and, when the value is 1, identify the DCI as a DL DCI format (e.g., DCI format 1_0).
- Carrier indicator: This indicates a serving cell index of a PUSCH cell scheduled by the DCI by using a field of a 0 or 3-bit size
- DFI flag: This distinguishes, for the UE and using a field of a 0 or 1-bit size, whether received DCI is DCI for activating a second uplink transmission resource or a DCI indicating CG-DFI
- HARQ-ACK bitmap: If the number of HARQ processes configured for a CG PUSCH is 16 or more, the bitmap is configured by 32 bits, and otherwise, the bitmap is configured by a 16-bit size, and each bit is mapped to one HARQ process index. In this case, HARQ process indices are mapped in ascending order from the smallest HARQ process index in order from the most significant bit (MSB) to the least significant bit (LSB) of the bitmap.
- A PUSCH transmission power control (TPC command for scheduled PUSCH) field controls increase or decrease of PUSCH transmission power of the UE
- All remaining bits are configured as 0 to match a size of the DCI with another DCI format

Therefore, when a UE configured to monitor DCI format 0_1 having a CRC scrambled with a CS-RNTI and including a DFI flag field, receives DCI format 0_1 and a value of the DFI flag field is 1, the UE determines that the DCI format is a DCI format including CG-DFI providing HARQ-ACK information for a transport block transmitted through a PUSCH, and receives a reception result of the transport block through a HARQ-ACK bitmap included in the DCI format.

The HARQ-ACK bitmap may correspond to HARQ-ACK information for a transport block received by the base station from the UE through a PUSCH with respect to all HARQ processes for a serving cell in which the base station transmits DCI format 0_1 or all uplink HARQ processes configured for the serving cell. In this case, the HARQ-ACK bitmap may, if DCI format 0_1 includes a carrier indicator, correspond to HARQ-ACK information for a transport block received by the base station from the UE through a PUSCH with respect to all HARQ processes for a serving cell indicated by the carrier indicator or all uplink HARQ processes configured for the serving cell.

For a transport block transmitted through a dynamic grant (DG) PUSCH, when the UE receives, after X symbols from the last symbol of the PUSCH, the first symbol of a PDCCH transmitting a DCI format indicating CG-DFI, the UE determines that HARQ-ACK information for a HARQ process number (or index) corresponding to the transport block transmitted through the PUSCH is valid. Here, X is a value configured by the base station through higher layer signaling or a value which may be pre-defined between the base station and the UE.

For a transport block transmitted through a dynamic grant (DG) PUSCH, in a case where the UE receives CG-DFI providing HARQ-ACK information for a HARQ process number corresponding to the transport block, when the first symbol of a PDCCH transmitting DCI format 0_1 providing the CG-DFI is a time point after at least X symbols from the last symbol of the PUSCH or a PUSCH among repeatedly transmitted PUSCHs, the UE determines that the HARQ-ACK information corresponding to the HARQ process number of the transport block, provided through the CG-DFI, is valid. Here, X is a value configured by the base station through higher layer signaling or a value which may be pre-defined between the base station and the UE.

For a transport block initially transmitted through a dynamic grant (DG) PUSCH, if the UE receives CG-DFI providing HARQ-ACK information for the transport block, and a value of the HARQ-ACK information is acknowledgement (ACK), the UE assumes that the base station has correctly received the transport block (or has successfully decoded the transport block). If a value of the HARQ-ACK information is negative ACK (NACK), the UE assumes that the base station has failed to correctly receive the transport block (or has failed to successfully decode the transport block).

In the following, a transport block transmitted through a CG PUSCH is described under the assumption that the PUSCH is transmitted over multiple slots. In a case where the UE receives CG-DFI providing HARQ-ACK information for a HARQ process number corresponding to the transport block,

- When the HARQ-ACK information is ACK, and is received at a time point after at least X symbols from the last symbol of a PUSCH transmitted in the first slot among PUSCHs transmitted over multiple slots, the UE determines that the HARQ-ACK information corresponding to the HARQ process number of the transport block, provided through the CG-DFI, is valid.
- When the HARQ-ACK information is NACK, and is received at a time point after at least X symbols from the last symbol of a PUSCH transmitted in the last slot among PUSCHs transmitted over multiple slots, the UE determines that the HARQ-ACK information corresponding to the HARQ process number of the transport block, provided through the CG-DFI, is valid.

Here, X is a value configured by the base station through higher layer signaling or a value which may be pre-defined between the base station and the UE.

For a transport block transmitted through a configured grant (CG) PUSCH, if the PUSCH is transmitted over multiple slots and the UE receives a valid ACK, the UE does not repeatedly transmit, through a PUSCH, a HARQ process number corresponding to the valid ACK. That is, the UE may terminate a PUSCH repeatedly transmitting a transport block of the HARQ process number corresponding to the valid ACK.

In an unlicensed band, the UE may perform listen before talk (LBT) (or a channel access procedure) to obtain a channel right. In order to avoid a collision between multiple UEs during the LBT procedure, the UE determines a contention window size (CWS). The UE determines a back-off time, based on the CWS. When the UE succeeds in transmitting a transport block in the uplink, the CWS is updated.

More specifically, a procedure of updating the CWS may be as follows. A CWS corresponding to a priority class p is given as CW_p.

Step 1) For all priority classes $p \in \{1,2,3,4\}$, configure $CW_p = CW_{min,p}$.

Step 2) When HARQ-ACK feedback is available after a last update of $CW_p$, proceed to step 3. Otherwise, when a UE transmission after a procedure described in clause 4.2.1.1 of 3GPP standard document TS 37.213 does not include a retransmission or is transmitted within a period T_w from a last transmission, perform step 5 in a reference duration corresponding to an earliest uplink channel occupancy after the last update of $CW_p$. Otherwise, perform step 4.

Step 3) HARQ-ACK feedback(s) corresponding to PUSCH(s) in a reference duration for a most recent uplink channel occupancy for which HARQ-ACK feedback is available is used as follows.

3a) When at least one HARQ-ACK feedback is ACK for a PUSCH(s) having transport block (TB)-based feedback or when at least 10% of HCBG (code block group)-based HARQ-ACK feedback is ACK, perform step 1 and, otherwise, perform step 4.

Step 4) Increase $CW_p$ for all priority classes $p \in \{1,2,3,4\}$ to a next higher allowed value.

Step 5) Maintain $CW_p$ for all priority classes $p \in \{1,2,3,4\}$ and proceed to step 2.

That is, the UE may update (or adjust) a contention window size (CWS) in step 3a) and step 4), based on valid HARQ-ACK information obtained through CG-DFI. More specifically, in step 3a), when at least one transport block among valid HARQ-ACK information obtained by the UE from the CG-DFI is ACK, the UE performs step 1) without updating the CWS, and otherwise performs step 4) to increase the CWS. This is because transmission of a transport block of a PUSCH may have failed due to a channel access collision between UEs, and thus a larger CWS value is used to reduce a collision between UEs.

[Regarding a PUSCH including two transport blocks]

The UE may support up to 4 as a maximum number of multiple-input and multiple-output (MIMO) layers and up to 4 as a maximum rank for uplink physical shared channel (PUSCH) transmission. In this case, a PUSCH transmitted by the UE may include one transport block. When a PUSCH is scheduled to the UE through DCI, a HARQ process number corresponding to the PUSCH may be indicated through the DCI. One transport block corresponds to the HARQ process number.

When the UE supports a value exceeding 4 as the maximum number of MIMO layers or the maximum rank, the UE may report, to the base station, the maximum number of MIMO layers or the maximum rank supported by the UE. This may be included in a capability report of the UE. The base station may configure a value exceeding 4 as the maximum number of MIMO layers or the maximum rank, based on the capability report of the UE. In this case, a PUSCH transmitted by the UE may include up to two transport blocks.

More specifically, when a PUSCH is scheduled through DCI (DG PUSCH), a HARQ process number corresponding to the PUSCH may be indicated through the DCI. When a value exceeding 4 is configured for the UE by the base station as the maximum number of MIMO layers or the maximum rank, up to two transport blocks may correspond to the HARQ process number. Through the DCI, the UE may determine whether one transport block is scheduled or two transport blocks are scheduled. More specifically, a modulation and coding scheme (MCS) field and a redundancy value (RV) field corresponding to each transport block may be included in the DCI, and when the MCS field and the RV field have particular values, the UE may determine that a corresponding transport block is disabled. In a case of a CG PUSCH configured by an upper layer or activated by a DCI format, a HARQ process number corresponding to the CG PUSCH may be configured for the UE by the base station. When a value exceeding 4 is configured for the UE by the base station as the maximum number of MIMO layers or the maximum rank, up to one transport block may correspond to the HARQ process number. That is, up to two transport blocks may correspond to the HARQ process number corresponding to a DG PUSCH, whereas up to one transport block may correspond to the HARQ process number corresponding to a CG PUSCH.

Hereinafter, the disclosure is related to a case where a value exceeding 4 is configured for the UE by the base station as the maximum number of MIMO layers or the maximum rank. In the disclosure, DCI scheduling a DG PUSCH may schedule up to two transport blocks. That is, up to two transport blocks may correspond to a HARQ process number corresponding to the DCI scheduling the DG PUSCH. In the disclosure, a CG PUSCH may include one transport block. That is, one transport block may correspond to a HARQ process number corresponding to the CG PUSCH. In such a situation, a CG-DFI design and interpretation method of the UE and the base station are disclosed.

**Embodiment 1: Increasing a CG-DFI bit size (2 bits per one HARQ process number)**

According to an embodiment of the disclosure, the UE may include, in DCI format 0_1 transmitting CG-DFI, HARQ-ACK information of 2 bits per one HARQ process number. More specifically, when the UE is indicated to be able to use up to 16 HARQ process numbers for uplink transmission, the UE may receive HARQ-ACK information through 32 bits of DCI format 0_1. If the UE is indicated to be able to use up to 32 HARQ process numbers for uplink transmission, the UE may receive HARQ-ACK information through 64 bits of DCI format 0_1.

For convenience of description, it is assumed that the UE is indicated to be able to use up to 32 HARQ process numbers. This is merely an example, and the disclosure is not limited thereto.

A mapping relationship between 64 bits of DCI format 0_1 and up to two transport blocks of each HARQ process number needs to be determined. Hereinafter, a method according to an embodiment of the disclosure is described. One or more combinations of at least some of the following methods may be used.

As a first method, first 32 bits (MSB 32 bits) among the 64 bits may be HARQ-ACK information for a first transport block of each HARQ process number. The 32 bits (MSB 32 bits) may be mapped in ascending order of a HARQ process number. That is, a first bit among the 32 bits (MSB 32 bits) is HARQ-ACK information for a first transport block of HARQ process number 0, and a second bit is HARQ-ACK information for a first transport block of HARQ process number 1. In this manner, an N-th bit may be mapped to HARQ-ACK information for a first transport block of HARQ process number N-1.

Last 32 bits (LSB 32 bits) among the 64 bits may be HARQ-ACK information for a second transport block of each HARQ process number. That is, a first bit among the 32 bits (LSB 32 bits) is HARQ-ACK information for a second transport block of HARQ process number 0, and a second bit is HARQ-ACK information for a second transport block of HARQ process number 1. In this manner, an N-th bit may be mapped to HARQ-ACK information for a second transport block of HARQ process number N-1.

As a second method, first 2 bits (MSB 2 bits) among the 64 bits may be HARQ-ACK information for two transport blocks of HARQ process number 0. A first bit among the 2 bits may be HARQ-ACK information for a first transport block of HARQ process number 0. Next 2 bits among the 64 bits (third and fourth bits among the 64 bits) may be HARQ-ACK information for two transport blocks of HARQ process number 1. A first bit among the 2 bits (the third bit among the 64 bits) may be HARQ-ACK information for a first transport block of HARQ process number 1. A second bit among the 2 bits (the fourth bit among the 64 bits) may be HARQ-ACK information for a second transport block of HARQ process number 1. In this manner, (2*N-1)th and (2*N)th bits among the 64 bits (N=1, ..., 32) may be mapped to HARQ-ACK information for two transport blocks of HARQ process number N-1. Here, the (2*N-1)th bit may be HARQ-ACK information for a first transport block of HARQ process number N-1, and the (2*N)th bit may be HARQ-ACK information for a second transport block of HARQ process number N-1.

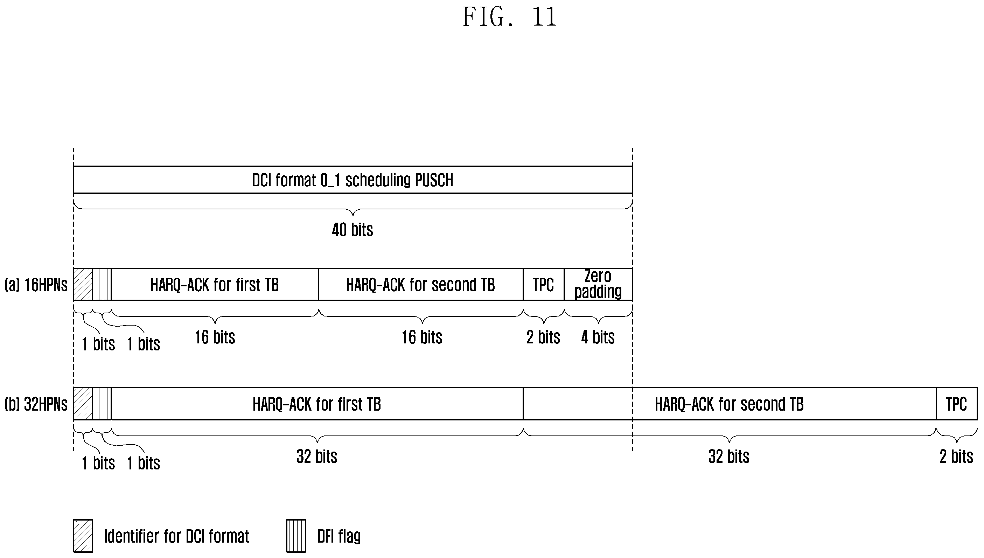

FIG. 11 illustrates DCI format 0_1 including CG-DFI according to the first method.

FIG. 11(a) illustrates DCI format 0_1 transmitting CG-DFI in a case where 16 HARQ process numbers (HPNs) are configured for the UE for uplink transmission. FIG. 11(b) illustrates DCI format 0_1 transmitting CG-DFI in a case where 32 HARQ process numbers are configured for the UE for uplink transmission.

Referring to FIG. 11(a) and FIG. 11(b), a first 1 bit of DCI format 0_1 may be an identifier for DCI formats field. For example, the bit may be fixed to 0. For example, a value of the bit may be 0.

Next, a 1-bit DFI flag field may be included. When the 1-bit DFI flag bit is 0 in DCI format 0_1 having a CRC scrambled with a CS-RNTI, the DCI format 0_1 may be interpreted as DCI for activating or releasing a CG PUSCH. When the 1-bit DFI flag bit is 1 in DCI format 0_1 having a CRC scrambled with a CS-RNTI, the DCI format 0_1 may be interpreted as DCI transmitting CG-DFI. It is assumed that the 1-bit DFI flag bit is 1 in DCI format 0_1 having a CRC scrambled with a CS-RNTI.

According to the first method, DCI format 0_1 transmitting CG-DFI may include a HARQ-ACK bitmap for 1st TB field and a HARQ-ACK bitmap for 2nd TB field. Here, the length of each of the HARQ-ACK bitmap for 1st TB field and the HARQ-ACK bitmap for 2nd TB field may be equal to a HARQ process number configured for uplink transmission. For example, when a HARQ process number configured for uplink transmission is 16, each of the HARQ-ACK bitmap for 1st TB field and the HARQ-ACK bitmap for 2nd TB field may be 16 bits. When a HARQ process number configured for uplink transmission is 32, each of the HARQ-ACK bitmap for 1st TB field and the HARQ-ACK bitmap for 2nd TB field may be 32 bits.

For reference, whether the HARQ-ACK bitmap for 2nd TB field is included in DCI format 0_1 including CG-DFI may be determined as follows. The UE may determine whether the HARQ-ACK bitmap for 2nd TB field is included in DCI format 0_1 transmitting CG-DFI as follows. The number of MIMO layers or the maximum rank to be used for PUSCH transmission may be configured for the UE by the base station. When at least one of the number of MIMO layers (a *maxMIMO-Layers* parameter of a higher layer signal) or the maximum rank (a *maxRank* parameter of a higher layer signal) is greater than 4, the HARQ-ACK bitmap for 2nd TB field is included may be included in DCI format 0_1 transmitting CG-DFI. As another method, whether the HARQ-ACK bitmap for 2nd TB field is included may be configured for the UE by the base station. That is, the UE may receive a higher layer signal from the base station, and the higher layer signal may configure whether the HARQ-ACK bitmap for 2nd TB field is included. Whether the HARQ-ACK bitmap for 2nd TB field is included may be configured explicitly or implicitly.

In addition, DCI format 0_1 including CG-DFI may further include a 2-bit TPC command for PUSCH.

The length (size) of DCI format 0_1 including CG-DFI needs to be equal to the length of DCI format 0_1 scheduling a PUSCH. This is because, when performing blind decoding, when the lengths of DCI are different, the UE needs to perform blind decoding with different length assumptions. When the lengths are identical, blind decoding may be performed with an identical length assumption. In order to match the same length, "0"s may be added to LSBs of DCI format 0_1 including CG-DFI. The process of adding "0"s may be referred to as zero padding.

For example, referring to FIG. 11(a), it is assumed that the length of DCI format 0_1 scheduling a PUSCH is 40 bits. DCI format 0_1 including CG-DFI may be 1 bit (Identifier for DCI formats) + 1 bit (DFI flag) + 16 bits (HARQ-ACK bitmap for 1st TB) + 16 bits (HARQ-ACK bitmap for 2nd TB) + 2 bits (TPC command for scheduled PUSCH) = 36 bits. Accordingly, in order to match 40 bits (the length of DCI format 0_1 scheduling a PUSCH), 4 bits "0000" may be added.

**Embodiment 2: Maintaining a CG-DFI bit size (1 bits per one HARQ process number)**

Referring to FIG. 11(b), the length of DCI format 0_1 scheduling a PUSCH may be smaller than the length of DCI format 0_1 including CG-DFI. For example, the length of DCI format 0_1 scheduling a PUSCH is 40 bits, but the length of DCI format 0_1 including CG-DFI may be 1 bit (Identifier for DCI formats) + 1 bit (DFI flag) + 32 bits (HARQ-ACK bitmap for 1st TB) + 32 bits (HARQ-ACK bitmap for 2nd TB) + 2 bits (TPC command for scheduled PUSCH) = 68 bits. In this case, it is not possible to match the length of DCI format 0_1 including CG-DFI to the length of DCI format 0_1 scheduling a PUSCH by zero padding used in FIG. 11(a). A method for solving this is disclosed.

As a zeroth method, the length of DCI format 0_1 scheduling a PUSCH may be matched to the length of DCI format 0_1 including CG-DFI. That is, when the length of DCI format 0_1 scheduling a PUSCH is smaller than the length of DCI format 0_1 including CG-DFI, "0"s may be added to LSBs of the DCI format 0_1 scheduling a PUSCH so that the length of the DCI format 0_1 scheduling a PUSCH is equal to the length of the DCI format 0_1 including CG-DFI. For example, referring to FIG. 11(b), since the length of DCI format 0_1 including CG-DFI is 68 bits, 28 bits "0" may be added to LSBs of DCI format 0_1 scheduling a PUSCH, which has 40 bits. The UE may perform blind decoding by assuming that a length of DCI format 0_1 is 68 bits.

According to the zeroth method, CG-DFI may include a HARQ-ACK bitmap for 1st TB field and a HARQ-ACK bitmap for 2nd TB field. However, since the length of DCI format 0_1 scheduling a PUSCH is increased, reception performance of DCI format 0_1 may be degraded, or more downlink control channel resources may be consumed.

Hereinafter, the disclosure provides a method of reducing the length of DCI format 0_1 including CG-DFI. A reduced length of DCI format 0_1 including CG-DFI may be equal to or smaller than the length of DCI format 0_1 scheduling a PUSCH.

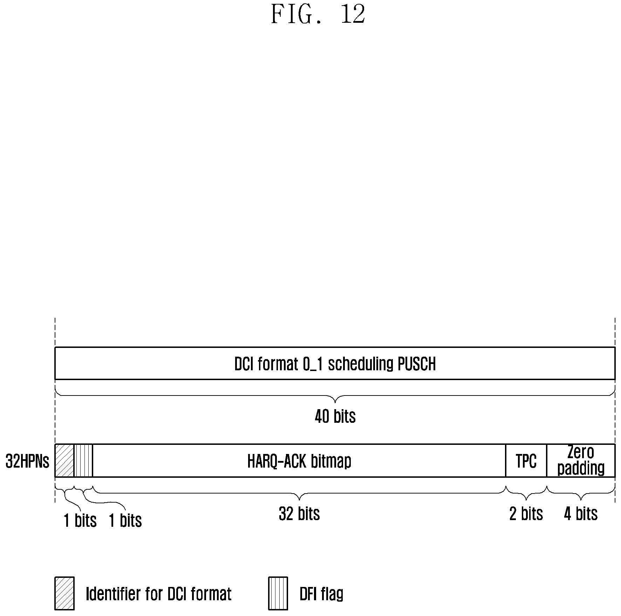

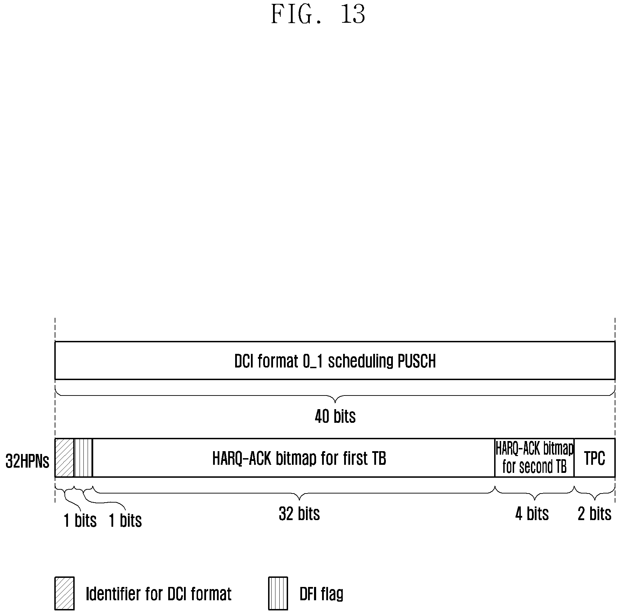

FIG. 12 and FIG. 13 are diagrams illustrating CG-DFI having a reduced length according to an embodiment of the disclosure.

Specifically, FIG. 12 is a diagram illustrating CG-DFI including one bitmap for two transport blocks according to an embodiment of the disclosure.

FIG. 13 is a diagram illustrating CG-DFI including two bitmaps for two transport blocks according to an embodiment of the disclosure. Here, the length of one bitmap may be smaller than the length of the other bitmap.

As a first method, DCI format 0_1 including CG-DFI may include a HARQ-ACK bitmap for 1st TB field but may not include a HARQ-ACK bitmap for 2nd TB field. Here, the number of MIMO layers or a maximum rank for PUSCH transmission is configured to be greater than 4 for the UE. That is, the UE may transmit two transport blocks through a PUSCH, but the UE may receive only HARQ-ACK information of a first transport block through CG-DFI. For reference, although the UE is able to transmit two transport blocks through a PUSCH, since transmission of only one transport block is possible through a CG-PUSCH, the UE may determine whether transmission of the CG-PUSCH is successful through the CG-DFI.

The first method may be applied when the length of DCI format 0_1 scheduling a PUSCH is smaller than the length of DCI format 0_1 including CG-DFI. The UE may expect that the length of DCI format 0_1 including CG-DFI excluding the HARQ-ACK bitmap for 2nd TB field is always equal to or smaller than the length of DCI format 0_1 scheduling a PUSCH. That is, the base station needs to configure the length of DCI format 0_1 scheduling a PUSCH (or the length of fields included in DCI format 0_1 scheduling a PUSCH) so as not to be smaller than the length of DCI format 0_1 including CG-DFI excluding the HARQ-ACK bitmap for 2nd TB field.

According to the first method, the UE may obtain HARQ-ACK information of first transport blocks corresponding to all HARQ process numbers from the CG-DFI. Here, the first transport block refers to a first transport block when two transport blocks are scheduled for a corresponding HARQ process number, and refers to a scheduled transport block when one transport block is scheduled for the corresponding HARQ process number.

Referring to FIG. 12, when 32 HARQ process numbers are configured for the uplink, CG-DFI may include one 32-bit HARQ-ACK bitmap field. The 32-bit HARQ-ACK bitmap field in FIG. 12 may be a HARQ-ACK bitmap for 1st TB field. That is, the 32-bit HARQ-ACK bitmap field may include pieces of HARQ-ACK information of first transport blocks of the 32 HARQ process numbers.

According to the first method, when the UE transmits a PUSCH including two transport blocks to the base station, the UE is unable to receive HARQ-ACK information of a second transport block through CG-DFI. The UE may assume at least one of the following for updating a contention window size (CWS).

- As a (1-1)th method, the UE may assume HARQ-ACK information of a second transport block as NACK for CWS updating. This does not mean that the second transport block actually has failed to be decoded. That is, in a CWS updating procedure, the UE may use a value obtained from CG-DFI as HARQ-ACK information of a first transport block and may assume HARQ-ACK information of a second transport block as NACK.

- As a (1-2)th method, the UE may assume HARQ-ACK information of a second transport block as ACK for CWS updating. That is, in a CWS updating procedure, the UE may use a value obtained from CG-DFI as HARQ-ACK information of a first transport block and may assume HARQ-ACK information of a second transport block as ACK. This does not mean that the second transport block has been actually successfully decoded. Accordingly, based on the ACK assumption, a HARQ soft buffer corresponding to the second transport block is not cleared, and previous data may continue to be stored.

- As a (1-3)th method, the UE may use only HARQ-ACK information of a first transport block as a basis for CWS updating. That is, at the time of CWS updating, the UE is unable to obtain HARQ-ACK information of a second transport block from CG-DFI, and thus may use only HARQ-ACK information of an obtainable first transport block as a basis. For reference, when new transport blocks corresponding to a specific HARQ process number are scheduled through DCI scheduling a PUSCH, the UE may assume that previous transport blocks corresponding to the specific HARQ process number correspond to ACK. This may be referred to as an implicit HARQ-ACK indication. When the implicit HARQ-ACK indication is received, the UE may use HARQ-ACK information corresponding to the transport blocks for CWS updating.

As a second method, DCI format 0_1 including CG-DFI may include a HARQ-ACK bitmap for 1st TB field while not including a part of a HARQ-ACK bitmap for 2nd TB field. Here, the number of MIMO layers or a maximum rank for PUSCH transmission is configured to be greater than 4 for the UE. That is, the UE may transmit two transport blocks through a PUSCH, but the UE may receive only HARQ-ACK information of first transport blocks of all HARQ process numbers and HARQ-ACK information of second transport blocks of some HARQ process numbers through CG-DFI. For reference, although the UE is able to transmit two transport blocks through a PUSCH, since transmission of only one transport block is possible through a CG-PUSCH, the UE may determine whether transmission of the CG-PUSCH is successful through the CG-DFI.

The second method may be applied when the length of DCI format 0_1 scheduling a PUSCH is smaller than the length of DCI format 0_1 including CG-DFI. The UE may exclude some bits of the HARQ-ACK bitmap for 2nd TB field (perform truncation) so that the length of DCI format 0_1 including CG-DFI is always equal to the length of DCI format 0_1 scheduling a PUSCH. For example, referring to FIG. 11(b), since the length of DCI format 0_1 scheduling a PUSCH is 40 bits but the length of DCI format 0_1 including CG-DFI is 1 bit (Identifier for DCI formats) + 1 bit (DFI flag) + 32 bits (HARQ-ACK bitmap for 1st TB) + 32 bits (HARQ-ACK bitmap for 2nd TB) + 2 bits (TPC command for scheduled PUSCH) = 68 bits, the excessive 28 bits may be excluded from the HARQ-ACK bitmap for 2nd TB field. That is, the length of the HARQ-ACK bitmap for 2nd TB field included in CG-DFI may be 4 bits.

The UE may exclude LSBs of the HARQ-ACK bitmap for 2nd TB field. For example, referring to FIG. 11(b), the UE may exclude LSBs of the HARQ-ACK bitmap for 2nd TB field so that the HARQ-ACK bitmap for 2nd TB field becomes 4 bits. The 4 bits may correspond to HARQ-ACK information of second transport blocks of HARQ process numbers 0, 1, 2, and 3.

The second method may be applied when the length of DCI format 0_1 scheduling a PUSCH is smaller than the length of DCI format 0_1 including CG-DFI. The base station may bundle some bits of the HARQ-ACK bitmap for 2nd TB field so that the length of DCI format 0_1 including CG-DFI is always equal to the length of DCI format 0_1 scheduling a PUSCH. The UE may determine the length of the HARQ-ACK bitmap for 2nd TB field and bundling information, based on the length of DCI format 0_1 scheduling a PUSCH. For example, referring to FIG. 11(b), since the length of DCI format 0_1 scheduling a PUSCH is 40 bits but the length (before bundling) of DCI format 0_1 including CG-DFI is 1 bit (Identifier for DCI formats) + 1 bit (DFI flag) + 32 bits (HARQ-ACK bitmap for 1st TB) + 32 bits (HARQ-ACK bitmap for 2nd TB (before bundling)) + 2 bits (TPC command for scheduled PUSCH) = 68 bits, the length of the HARQ-ACK bitmap for 2nd TB field may be 4 bits. That is, the base station may bundle 32 bits required to be included in the HARQ-ACK bitmap for 2nd TB into 4 bits and include the 4 bits in the HARQ-ACK bitmap for 2nd TB field. The UE may determine the length of the HARQ-ACK bitmap for 2nd TB field as 4 bits, based on 40 bits which is the length of DCI format 0_1 scheduling a PUSCH. In addition, the UE may interpret the 4 bits as HARQ-ACK bits of second TBs of 32 HARQ process numbers according to a bundling method.

A method of bundling HARQ-ACK bits required to be included in the HARQ-ACK bitmap for 2nd TB field may be as follows. For example, the number of HARQ-ACK bits required to be included in the HARQ-ACK bitmap for 2nd TB field is given as X, and the number of HARQ-ACK bits included in the HARQ-ACK bitmap for 2nd TB field is given as Y. X may be 16 or 32.

As an example, the UE and the base station may obtain S=ceil(X/Y), and may group HARQ-ACK bits required to be included in the HARQ-ACK bitmap for 2nd TB field of X bits sequentially into S bits. A last group (a Y-th group) may include X-S*(Y-1) bits. The UE and the base station may assume a bit representing a group as ACK when all S bits included in the group are ACK, or assume the bit representing the group as NACK when at least one of the S bits is NACK. Alternatively, the UE and the base station may assume a bit representing a group as NACK when all S bits included in the group are NACK, or assume the bit representing the group as ACK when at least one of the S bits is ACK.

As another example, the UE and the base station may obtain S1=ceil(X/Y) and S2=floor(X/Y), and may group HARQ-ACK bits required to be included in the HARQ-ACK bitmap for 2nd TB field of X bits into $M_1$=mod(X,Y) groups each including S1 bits and $M_2$=Y-mod(X,Y) groups each including S2 bits. The UE and the base station may assume a bit representing a group as ACK when all bits included in the group are ACK, or assume the bit representing the group as NACK when at least one of the bits included in the group is NACK. Alternatively, the UE and the base station may assume a bit representing a group as NACK when all bits included in the group are NACK, or assume the bit representing the group as ACK when at least one of the bits included in the group is ACK.

As an example, the base station may select Y-1 bits among X bits and include the Y-1 bits in Y-1 bits of a HARQ-ACK bitmap for 2nd TB field, and generate one bit representing the remaining X-(Y-1) bits and include the one bit in 1 bit of the HARQ-ACK bitmap for 2nd TB field. The UE may obtain HARQ-ACK bits of second TBs of Y-1 HARQ process numbers from Y-1 bits of a HARQ-ACK bitmap for 2nd TB field of Y bits, and may obtain HARQ-ACK bits of second TBs of X-(Y-1) HARQ process numbers from the remaining 1 bit.

Here, the UE and the base station may assume a bit representing X-(Y-1) bits as ACK when all the X-(Y-1) bits are ACK, or assume the bit representing the X-(Y-1) bits as NACK when at least one of the X-(Y-1) bits is NACK. Alternatively, the UE may assume a bit representing X-(Y-1) bits as NACK when all the X-(Y-1) bits are NACK, or assume the bit representing the X-(Y-1) bits as ACK when at least one of the X-(Y-1) bits is ACK.

Referring to FIG. 13, for example, when 32 HARQ process numbers are configured for the uplink, CG-DFI may include a 32-bit HARQ-ACK bitmap for 1st TB field and a 4-bit HARQ-ACK bitmap for 2nd TB. The 32-bit HARQ-ACK bitmap for 1st TB field in FIG. 13 may include pieces of HARQ-ACK information of first transport blocks of the 32 HARQ process numbers. The 4-bit HARQ-ACK bitmap for 2nd TB may include pieces of HARQ-ACK information of second transport blocks of some four HARQ process numbers, or may include 4 bits obtained by bundling pieces of HARQ-ACK information of second transport blocks of the 32 HARQ process numbers.

As a third method, DCI format 0_1 including CG-DFI may include bits in which a HARQ-ACK bitmap for 1st TB field and a HARQ-ACK bitmap for 2nd TB field are spatially bundled. More specifically, a b-th bit of the HARQ-ACK bitmap for 1st TB field and a b-th bit of the HARQ-ACK bitmap for 2nd TB field may be spatially bundled and represented as 1 bit. Accordingly, CG-DFI may include a 16-bit or 32-bit HARQ-ACK bitmap, and a b-th bit of the HARQ-ACK bitmap is a value obtained by spatially bundling HARQ-ACK bits of two transport blocks of HARQ process number b-1. Here, the number of MIMO layers or a maximum rank for PUSCH transmission is configured to be greater than 4 for the UE.

AND-based spatial bundling indicates ACK when both of two HARQ-ACK bits are ACK, and indicates NACK when at least one of the two HARQ-ACK bits is NACK. For reference, when the UE transmits only one transport block, a HARQ-ACK bit of a transport block that is not transmitted may be assumed as ACK.

OR-based spatial bundling indicates NACK when both of two HARQ-ACK bits are NACK, and indicates ACK when at least one of the two HARQ-ACK bits is ACK. For reference, when the UE transmits only one transport block, a HARQ-ACK bit of a transport block that is not transmitted may be assumed as NACK.

The third method may be applied when the length of DCI format 0_1 scheduling a PUSCH is smaller than the length of DCI format 0_1 including CG-DFI including a HARQ-ACK bitmap for 1st TB field and a HARQ-ACK bitmap for 2nd TB field. In this case, instead of lengths of the HARQ-ACK bitmap for 1st TB field and the HARQ-ACK bitmap for 2nd TB field, a HARQ-ACK bitmap field having a length to which spatial bundling is applied may be included in CG-DFI. The UE may expect that the length of DCI format 0_1 including CG-DFI including a HARQ-ACK bitmap field of 16 bits or 32 bits is always equal to or smaller than the length of DCI format 0_1 scheduling a PUSCH. That is, the base station needs to configure the length of DCI format 0_1 scheduling a PUSCH (or the length of fields included in DCI format 0_1 scheduling a PUSCH) so as not to be smaller than the length of DCI format 0_1 including CG-DFI including the HARQ-ACK bitmap field.

When AND-based spatial bundling is used in the third method, the UE may obtain AND-based spatially bundled HARQ-ACK information corresponding to all HARQ process numbers from the CG-DFI. That is, in a case where two transport blocks correspond to one HARQ process number, when a bit corresponding to the HARQ process number is ACK, the UE may identify that both of the two transport blocks of the HARQ process number are ACK, and when a bit corresponding to one HARQ process number is NACK, the UE may identify that at least one of the two transport blocks of the HARQ process is NACK. In a case where one transport block corresponds to one HARQ process number, when a bit corresponding to the HARQ process number is ACK, the UE may identify that the one transport block of the HARQ process number is ACK, and when a bit corresponding to one HARQ process number is NACK, the UE may identify that the transport block of the HARQ process is NACK. The UE may determine whether transmission of a CG PUSCH is successful. Since the CG PUSCH transmits only one transport block for one HARQ process number, HARQ-ACK information for the one transport block may be received. However, the UE may have a problem in updating a CWS. The CWS updating may be determined based on whether at least one transport block is successfully received. When the base station correctly receives one of two transport blocks but fails to correctly receive the other, NACK is generated in a case of AND-based spatial bundling. Accordingly, although the UE succeeds in transmission of one transport block, the UE may not use the transmission for CWS updating.

When OR-based spatial bundling is used in the third method, the UE may obtain OR-based spatially bundled HARQ-ACK information corresponding to all HARQ process numbers from the CG-DFI. That is, in a case where two TBs correspond to one HARQ process number, when a bit corresponding to the HARQ process number is NACK, the UE may identify that both of the two transport blocks of the HARQ process number are NACK, and when a bit corresponding to one HARQ process number is ACK, the UE may identify that at least one of the two transport blocks of the HARQ process is ACK. In a case where one transport block corresponds to one HARQ process number, when a bit corresponding to the HARQ process number is ACK, the UE may identify that the one transport block of the HARQ process number is ACK, and when a bit corresponding to one HARQ process number is NACK, the UE may identify that the one transport block of the HARQ process is NACK. The UE may determine whether transmission of a CG PUSCH is successful. Since the CG PUSCH transmits only one transport block for one HARQ process number, HARQ-ACK information for the one transport block may be received. In addition, the UE may correctly update the CWS. At least one of two TBs being successfully received is indicated to the UE through an OR-based spatially bundled bit, and thus the UE may perform a CWS updating operation based on whether at least one transport block is successfully transmitted, when performing CWS updating.

Referring to FIG. 12, when 32 HARQ process numbers are configured for the uplink, the UE may expect that CG-DFI includes one 32-bit HARQ-ACK bitmap field. The 32-bit HARQ-ACK bitmap field in FIG. 12 may include 32 bits after spatial bundling is performed. Spatial bundling being OR-based or AND-based is only an example, and another logical operation, for example, an XOR operation, may be applied.

As a fourth method, DCI format 0_1 including CG-DFI may include a HARQ-ACK bitmap for 1st TB field and some bits of a HARQ-ACK bitmap for 2nd TB field. Here, some bits of the HARQ-ACK bitmap for 2nd TB field may correspond to HARQ process numbers that are not HARQ process numbers allocated to a CG-PUSCH configuration. The HARQ process numbers used for the CG PUSCH may be determined from the CG-PUSCH configuration. More specifically, the number of HARQ processes (nrofHARQ-Processes) and an offset (harq-ProcID-Offset) used by a CG PUSCH may be configured for the UE from a CG PUSCH configuration (ConfiguredGrantConfig of a higher layer signal). The UE may determine the number of HARQ processes used by the CG PUSCH, based on the number of HARQ processes and the offset. More specifically, the UE may determine that HARQ process numbers having indices of harq-ProcID-Offset, harq-ProcID-Offset+1, ..., harq-ProcID-Offset+nrofHARQ-Processes-1 are allocated to the CG PUSCH.

According to the fourth method, the UE may obtain HARQ-ACK information of one transport block for HARQ process numbers corresponding to a CG PUSCH from a HARQ-ACK bitmap for 1st TB field of CG-DFI. Since one transport block is transmitted per HARQ process number in the CG PUSCH, whether transmission of the CG PUSCH is successful may be determined based on the HARQ-ACK information obtained from the HARQ-ACK bitmap for 1st TB field. The UE may obtain HARQ-ACK information of HARQ process numbers that are not the HARQ process numbers corresponding to the CG PUSCH from the HARQ-ACK bitmap for 1st TB field and a HARQ-ACK bitmap for 2nd TB field of the CG-DFI. Accordingly, the UE may correctly perform CWS updating, based on HARQ-ACK information of the CG-DFI.

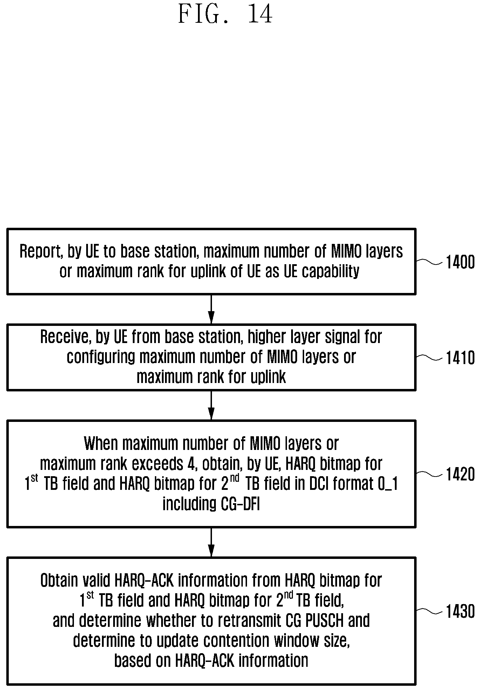

FIG. 14 illustrates a flowchart of an operation of a UE according to an embodiment of the disclosure. FIG. 14 may relate to an operation of a UE according to a first embodiment of the disclosure. The flowchart of FIG. 14 illustrates an example method that may be implemented according to the principles of the disclosure, and various modifications may be made to the method illustrated in the flowchart. For example, although illustrated as a sequence of operations, various operations in each figure may overlap, may be performed in parallel, may be performed in a different order, or may be performed multiple times. In another example, operations may be omitted or replaced with other operations.

As a first operation 1400, a UE may transmit, to a base station, a maximum number of MIMO layers or a maximum rank for the uplink of the UE through a UE capability report. In addition, the UE may transmit, to the base station, the number of HARQ process numbers that the UE is able to use for the uplink through a UE capability report.

As a second operation 1410, the UE may receive, from the base station, a higher layer signal (e.g., an RRC signal) for configuring a maximum number of MIMO layers or a maximum rank for the uplink. The configured maximum number of MIMO layers or maximum rank may not be greater than the value reported by the UE. In addition, the number of HARQ processes that the UE is able to use for the uplink may be configured for the UE by the base station. Here, the number of HARQ processes may be configured commonly for a cell or may be configured by each configured grant PUSCH configuration. The number of HARQ processes may be one of 16 or 32.

As a third operation 1420, when the configured maximum number of MIMO layers or the maximum rank exceeds 4, the UE may assume that DCI format 0_1 including CG-DFI includes a HARQ-ACK bitmap for 1st TB field and a HARQ-ACK bitmap for 2nd TB field. Here, the HARQ-ACK bitmap for 1st TB field may include HARQ-ACK information of a first transport block in ascending order of HARQ process numbers, and the HARQ-ACK bitmap for 2nd TB field may include HARQ-ACK information of a second transport block in ascending order of HARQ process numbers.

As a fourth operation 1430, the UE may obtain valid HARQ-ACK information from the HARQ-ACK bitmap for 1st TB field and the HARQ-ACK bitmap for 2nd TB field. The UE may determine whether to retransmit a CG PUSCH or determine to update a contention window size, based on the valid HARQ-ACK information.

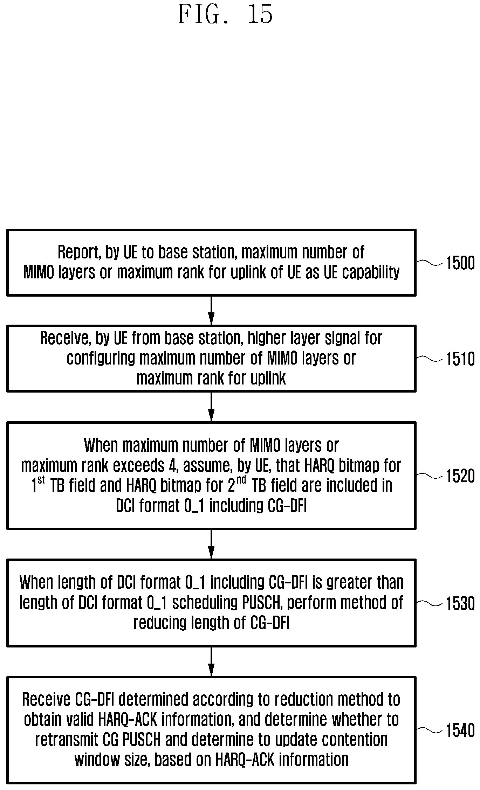

FIG. 15 illustrates a flowchart of an operation of a UE according to an embodiment of the disclosure. FIG. 15 may relate to an operation of a UE according to a second embodiment of the disclosure. The flowchart of FIG. 15 illustrates an example method that may be implemented according to the principles of the disclosure, and various modifications may be made to the method illustrated in the flowchart. For example, although illustrated as a sequence of operations, various operations in each figure may overlap, may be performed in parallel, may be performed in a different order, or may be performed multiple times. In another example, operations may be omitted or replaced with other operations.

As a first operation 1500, a UE may transmit, to a base station, a maximum number of MIMO layers or a maximum rank for the uplink of the UE through a UE capability report. In addition, the UE may transmit, to the base station, the number of HARQ process numbers that the UE is able to use for the uplink through a UE capability report.

As a second operation 1510, the UE may receive, from the base station, a higher layer signal (e.g., an RRC signal) for configuring a maximum number of MIMO layers or a maximum rank for the uplink. The configured maximum number of MIMO layers or maximum rank may not be greater than the value reported by the UE. In addition, the number of HARQ processes that the UE is able to use for the uplink may be configured for the UE by the base station. Here, the number of HARQ processes may be configured commonly for a cell or may be configured by each configured grant PUSCH configuration. The number of HARQ processes may be one of 16 or 32.

As a third operation 1520, when the configured maximum number of MIMO layers or the maximum rank exceeds 4, the UE may assume that DCI format 0_1 including CG-DFI includes a HARQ-ACK bitmap for 1st TB field and a HARQ-ACK bitmap for 2nd TB field. Here, the HARQ-ACK bitmap for 1st TB field may include HARQ-ACK information of a first transport block in ascending order of HARQ process numbers, and the HARQ-ACK bitmap for 2nd TB field may include HARQ-ACK information of a second transport block in ascending order of HARQ process numbers.

As a fourth operation 1530, the UE may receive DCI format 0_1 from the base station. In this case, the UE may receive DCI format 0_1 by performing blind decoding of the DCI format 0_1, based on the length of DCI format 0_1 scheduling a PUSCH. The UE may compare the length of DCI format 0_1 including CG-DFI calculated/obtained by the UE with the length of DCI format 0_1 scheduling a PUSCH. When the length of the DCI format 0_1 including the CG-DFI calculated/obtained by the UE is smaller than the length of DCI format 0_1 scheduling a PUSCH, the UE may assume that the length of the DCI format 0_1 including the CG-DFI is equal to the length of the DCI format 0_1 scheduling a PUSCH by performing zero padding on the DCI format 0_1 including CG-DFI calculated/obtained by the UE. When the length of the DCI format 0_1 including the CG-DFI calculated/obtained by the UE is greater than the length of DCI format 0_1 scheduling a PUSCH, the UE may perform a method of reducing the length of CG-DFI. The method of reducing the length of CG-DFI may include at least one of the methods described above. Here, the length of the CG-DFI calculated/obtained by the UE may be equal to a sum of the length (size) of a control information format identifier field, the length (size) of a carrier indicator field, the length (size) of a DFI flag field, the length (size) of a HARQ-ACK bitmap field, and the length (size) of a PUSCH transmission power control field. For reference, when a PUSCH includes up to two transport blocks, a HARQ-ACK bitmap field may include a HARQ-ACK bitmap field (e.g., a HARQ-ACK bitmap for 1st TB field) for a first transport block and a HARQ-ACK bitmap field (e.g., a HARQ-ACK bitmap for 2nd TB field) for a second transport block. The length of the CG-DFI calculated by the UE is a length excluding zero padding for matching a length.

As a fifth operation 1540, the UE may receive CG-DFI determined according to a zero-padding method or a length reduction method from the received DCI format 0_1 to obtain valid HARQ-ACK information corresponding to HARQ process numbers. The UE may determine whether to retransmit a CG PUSCH or determine to update a contention window size, based on the valid HARQ-ACK information.

**Embodiment 3: Configuration of HARQ process numbers included in CG-DFI**

According to an embodiment of the disclosure, a HARQ process number to be included in CG-DFI may be configured. The UE may expect that HARQ-ACK information corresponding to the configured HARQ process number is included in the CG-DFI.

More specifically, information on a HARQ process number to be included in CG-DFI may be configured for the UE by the base station through a higher layer signal as a bitmap. The length of the bitmap may be equal to the number of HARQ process numbers to which PUSCH transmission is allocated. If the number of HARQ process numbers to which PUSCH transmission is allocated is 16, the bitmap may be 16 bits, and if the number of HARQ process numbers to which PUSCH transmission is allocated is 32, the bitmap may be 32 bits. Each bit of the bitmap corresponds to a HARQ process number, and when a bit of the bitmap has a particular value (e.g., "1" or "0"), HARQ-ACK information of a corresponding HARQ process number may be excluded from the CG-DFI.

When the UE receives DCI format 0_1 including CG-DFI, the UE may obtain HARQ-ACK information corresponding to HARQ process numbers other than HARQ process numbers excluded according to the bitmap. For example, when the number of HARQ process numbers to which PUSCH transmission is allocated is 16 and HARQ-ACK information for HARQ process numbers 0, 1, 2, 3, 4, 5, 6, and 7 is excluded from CG-DFI according to a bitmap, the CG-DFI received by the UE includes HARQ-ACK information for HARQ process numbers 8, 9, 10, 11, 12, 13, 14, and 15. More specifically, a HARQ-ACK bitmap for 1st TB field may include HARQ-ACK information of first transport blocks of HARQ process numbers 8, 9, 10, 11, 12, 13, 14, and 15, and a HARQ-ACK bitmap for 2nd TB field may include HARQ-ACK information of second transport blocks of HARQ process numbers 8, 9, 10, 11, 12, 13, 14, and 15. Here, the length of the HARQ-ACK bitmap for 1st TB field and the length of the HARQ-ACK bitmap for 2nd TB field may be equal to the number of HARQ process numbers included in the CG-DFI (e.g., the number is 8 when the CG-DFI includes HARQ process numbers 8, 9, 10, 11, 12, 13, 14, and 15).

According to an embodiment of the disclosure, a HARQ process number and transport blocks to be included in CG-DFI may be configured. The UE may expect that HARQ-ACK information corresponding to the configured HARQ process number and transport blocks is included in the CG-DFI.

More specifically, information on a HARQ process number and a transport block to be included in CG-DFI may be configured for the UE by the base station through a higher layer signal as a bitmap. The length of the bitmap may be equal to a product of the number of HARQ process numbers to which PUSCH transmission is allocated and the number of transport blocks includable in the PUSCH. If the number of HARQ process numbers to which PUSCH transmission is allocated is 16 and the PUSCH is able to transmit only one transport block, the bitmap may be 16 bits, if the number of HARQ process numbers to which PUSCH transmission is allocated is 16 and the PUSCH is able to transmit up to two transport blocks, the bitmap may be 32 bits, if the number of HARQ process numbers to which PUSCH transmission is allocated is 32 and the PUSCH is able to transmit only one transport block, the bitmap may be 32 bits, and if the number of HARQ process numbers to which PUSCH transmission is allocated is 32 and the PUSCH is able to transmit up to two transport blocks, the bitmap may be 64 bits. Each bit of the bitmap corresponds to a HARQ process number and a transport block, and when a bit of the bitmap has a particular value (e.g., "1"), HARQ-ACK information of a transport block of a corresponding HARQ process number may be excluded from the CG-DFI.

When the UE receives DCI format 0_1 including CG-DFI, the UE may obtain HARQ-ACK information corresponding to (HARQ process numbers, transport blocks) other than (HARQ process numbers, transport blocks) excluded according to the bitmap. For example, in a case where the number of HARQ process numbers to which PUSCH transmission is allocated is 16 and the PUSCH is able to transmit up to two transport blocks, when HARQ-ACK information for second transport blocks of HARQ process numbers 0, 1, 2, 3, 4, 5, 6, and 7 is excluded from the CG-DFI according to a bitmap, and HARQ-ACK information for first transport blocks of HARQ process numbers 0, 1, 2, and 3 is excluded from the CG-DFI, the CG-DFI received by the UE includes HARQ-ACK information for first transport blocks of HARQ process numbers 4, 5, 6, 7, 8, 9, 10, 11, 12, 13, 14, and 15 and HARQ-ACK information for second transport blocks of HARQ process numbers 8, 9, 10, 11, 12, 13, 14, and 15.

More specifically, a HARQ-ACK bitmap for 1st TB field may include HARQ-ACK information of first transport blocks of HARQ process numbers 4, 5, 6, 7, 8, 9, 10, 11, 12, 13, 14, and 15, and a HARQ-ACK bitmap for 2nd TB field may include HARQ-ACK information of second transport blocks of HARQ process numbers 8, 9, 10, 11, 12, 13, 14, and 15.

Here, the length of the HARQ-ACK bitmap for 1st TB field may be equal to the number of HARQ process numbers of first transport blocks included in the CG-DFI (e.g., the number is 12 due to HARQ process number 4, 5, 6, 7, 8, 9, 10, 11, 12, 13, 14, and 15), and the length of the HARQ-ACK bitmap for 2nd TB field may be equal to the number of HARQ process numbers of second transport blocks included in the CG-DFI (e.g., the number is 8 due to HARQ process number 8, 9, 10, 11, 12, 13, 14, and 15).

**Embodiment 4: Configuration of the number of transport blocks per HARQ process number**

According to an embodiment of the disclosure, a maximum number of transport blocks includable per HARQ process number may be configured for the UE by the base station. The UE may interpret CG-DFI, based on the configuration.

For example, when HARQ process numbers are 1, 2, 3, ..., 32, up to two transport blocks may correspond to HARQ process numbers 1, 2, ..., 16, and one transport block may correspond to HARQ process numbers 17, 18, 19, ..., 32. The base station may configure the information for the UE. The base station may configure, for the UE, a maximum number of transport blocks includable per HARQ process number.

The UE may expect that the length of a HARQ-ACK bitmap for 1st TB field (a field including HARQ-ACK information of a first transport block) of CG-DFI is equal to the number of all HARQ process numbers. That is, the length of the HARQ-ACK bitmap for 1st TB field may be 32 bits. A HARQ-ACK bitmap for 2nd TB field (a field including HARQ-ACK information of a second transport block) may have a length equal to the number of HARQ process numbers to which a maximum of two transport blocks may correspond. That is, the HARQ-ACK bitmap for 2nd TB field may be 16 bits.

A method by which the base station configures, for the UE, a maximum number of transport blocks includable per HARQ process number may be one of the following methods or at least one combination thereof.

As a first method, the base station may indicate, to the UE, an index of a HARQ process number for which a maximum of two transport blocks can be included. For example, when the base station configures {1, 2, 3, 4, 5, 6, 7, 8, 9, 10, 11, 12, 13, 14, 15, 16} for the UE, the UE may determine that a maximum of two transport blocks can be included for HARQ process numbers 1, 2, 3, 4, 5, 6, 7, 8, 9, 10, 11, 12, 13, 14, 15, and 16. The UE may determine that one transport block can be included for the remaining HARQ process numbers.

As a second method, the base station may indicate, to the UE, an index of a HARQ process number for which one transport block is includable. For example, when the base station configures {17, 18, 19, 20, 21, 22, 23, 24, 25, 26, 27, 28, 29, 30, 31, 32} for the UE, the UE may determine that one transport block is includable for HARQ process numbers 17, 18, 19, 20, 21, 22, 23, 24, 25, 26, 27, 28, 29, 30, 31, and 32. The UE may determine that up to two transport blocks are includable for remaining HARQ process numbers.

As a third method, the base station may indicate, to the UE, the number of HARQ process numbers for which up to two transport blocks are includable. The UE may assume that up to two transport blocks are included for the indicated number of HARQ process numbers and that one transport block is included in remaining HARQ process numbers. When the number of HARQ process numbers for which up to two transport blocks are includable is H, the UE may determine that up to two transport blocks are included for H HARQ process numbers having lower indices. For example, when H=16, the UE may determine that up to two transport blocks are includable for HARQ process numbers 1, 2, 3, 4, 5, 6, 7, 8, 9, 10, 11, 12, 13, 14, 15, and 16. The UE may determine that one transport block is includable for remaining HARQ process numbers. As another method, when the number of HARQ process numbers for which up to two transport blocks are includable is H, the UE may determine that up to two transport blocks are included for H HARQ process numbers having higher indices. The UE may determine that one transport block is includable for remaining HARQ process numbers. For example, when H=16, the UE may determine that up to two transport blocks are includable for HARQ process numbers 17, 18, 19, 20, 21, 22, 23, 24, 25, 26, 27, 28, 29, 30, 31, and 32. The UE may determine that one transport block is includable for remaining HARQ process numbers.

As a fourth method, the base station may indicate, to the UE, the number of HARQ process numbers for which one transport block is includable. The UE may assume that one transport block is included for the indicated number of HARQ process numbers and that up to two transport blocks are included in remaining HARQ process numbers. When the number of HARQ process numbers for which one transport block is includable is H, the UE may determine that one transport block is included for H HARQ process numbers having lower indices. The UE may determine that up to two transport blocks are includable for remaining HARQ process numbers. For example, when H=16, the UE may determine that one transport block is includable for HARQ process numbers 1, 2, 3, 4, 5, 6, 7, 8, 9, 10, 11, 12, 13, 14, 15, and 16. The UE may determine that up to two transport blocks are includable for remaining HARQ process numbers. As another method, when the number of HARQ process numbers for which one transport block is includable is H, the UE may determine that one transport blocks are included for H HARQ process numbers having higher indices. For example, when H=16, the UE may determine that one transport block is includable for HARQ process numbers 17, 18, 19, 20, 21, 22, 23, 24, 25, 26, 27, 28, 29, 30, 31, and 32. The UE may determine that up to two transport blocks are includable for remaining HARQ process numbers.

For reference, the UE may report, to the base station, the number of HARQ process numbers for which up to two transport blocks are includable among HARQ process numbers as a UE capability. For example, when the UE having 32 available HARQ process numbers are able to include up to two transport blocks for only 16 HARQ process numbers among the 32 HARQ process numbers, the UE may report 16 to the base station as a UE capability. The base station may configure HARQ process numbers for which up to two transport blocks are includable, based on the UE capability.

For reference, when the UE receives DCI scheduling a PUSCH and the DCI corresponds to a HARQ process number for which one transport block is includable, the UE may assume that a second transport block is not scheduled. That is, when the base station schedules two transport blocks for a HARQ process number for which one transport block is includable, the UE may determine this case as an error case and may discard the DCI. Discarding the DCI means that the UE does not perform an operation indicated by the DCI.

**Embodiment 5: Design of CG-DFI including partial HARQ bitmap field**

According to an embodiment of the disclosure, CG-DFI may not include all information and may include only partial information. That is, information included in CG-DFI according to an embodiment of the disclosure described above may include all information described in an embodiment of the disclosure or may include partial information. Here, information to be included in CG-DFI may be indicated by DCI format 0_1 including the CG-DFI.

More specifically, the base station and the UE may assume, as first partial information, a HARQ-ACK bitmap for $1^{st}$ TB field (a field including HARQ-ACK bits of first transport blocks), and as second partial information, a HARQ-ACK bitmap for $2^{nd}$ TB field (a field including HARQ-ACK bits of second transport blocks). As another method, the base station and the UE may assume, as first partial information, HARQ-ACK information for HARQ process numbers 1, 2, ..., S (HARQ-ACK information for two TBs per HARQ process number) and as second partial information, HARQ-ACK information for HARQ process numbers S, S+1, ..., Max_HPN (HARQ-ACK information for two TBs per HARQ process number). Here, Max_HPN is a maximum number of HARQ process numbers configured for the UE and may be 16 or 32. S may be a half of Max_HPN.

DCI format 0_1 including CG-DFI may include a field indicating an index of partial information. For example, when the base station and the UE assume first partial information and second partial information, DCI format 0_1 including CG-DFI may include a 1-bit indicator. When the indicator is "0," the CG-DFI may include the first partial information, and when the indicator is "1," CG-DFI may include the second partial information. The UE may determine which information is included among the first partial information and the second partial information, based on the indicator. The CG-DFI may include the first partial information and/or the second partial information.

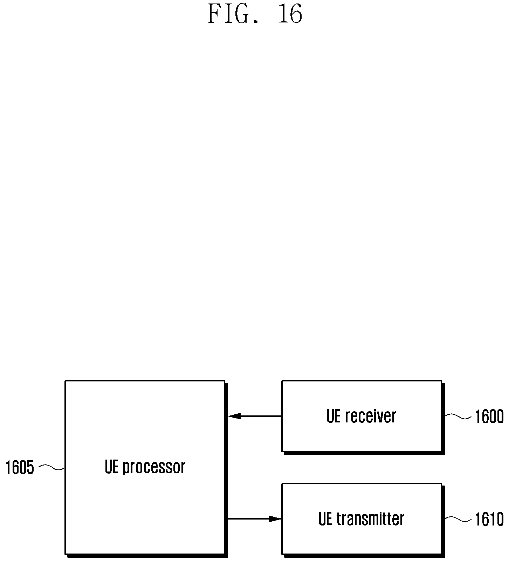

FIG. 16 illustrates a structure of a UE in a wireless communication system according to an embodiment of the disclosure.

Referring to FIG. 16, the UE may include a transceiver, which refers to a UE receiver 1600 and a UE transmitter 1610 as a whole, a memory (not illustrated), and a UE processor 1605 (or UE controller or processor). The UE transceiver 1600 and 1610, the memory, and the UE processor 1605 may operate according to the above-described communication methods of the UE. However, components of the UE are not limited to the above=-described example. For example, the UE may also include a larger or smaller number of components than the components described above. Furthermore, the transceiver, the memory, and the processor may be implemented in the form of a single chip.

The transceiver may transmit/receive signals with base stations. Here, the signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is merely an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the UE. In addition, the memory may store control information or data included in signals transmitted/received by the UE. The memory may include a storage medium such as a ROM, a RAM, a hard disk, a CD-ROM, and a DVD, or a combination of storage media. In addition, the memory may include multiple memories.

The processor may control a series of processes so that the UE can operate according to the above-described embodiments. For example, the processor may control the components of the UE to receive DCI configured in two layers so as to simultaneously receive multiple PDSCHs. The processor may include multiple processors, and the processor may perform the control operation of the components of the UE by executing programs stored in the memory.

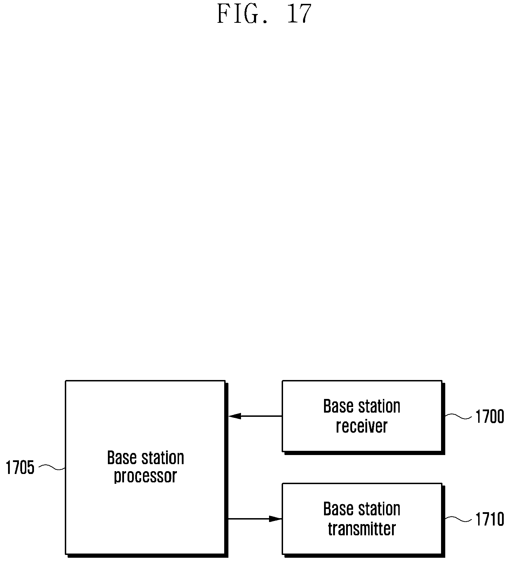

FIG. 17 illustrates a structure of a base station in a wireless communication system according to an embodiment of the disclosure.

Referring to FIG. 17, the base station may include a transceiver, which refers to a base station receiver 1700 and a base station transmitter 1710 as a whole, a memory (not illustrated), and a base station processor 1705 (or base station controller or processor). The base station transceiver 1700 and 1710, the memory, and the base station processor 1705 may operate according to the above-described communication methods of the base station. However, components of the base station are not limited to the above-described example. For example, the base station may include a larger or smaller number of components than the components. described above. Furthermore, the transceiver, the memory, and the processor may be implemented in the form of a single chip.

The transceiver may transmit/receive signals with UEs. Here, the signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is merely an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the base station. In addition, the memory may store control information or data included in signals transmitted/received by the base station. The memory may include a storage medium such as a ROM, a RAM, a hard disk, a CD-ROM, and a DVD, or a combination of storage media. In addition, the memory may include multiple memories.

The processor may control a series of processes so that the base station may operate according to the above-described embodiments of the disclosure. For example, the processor may control each component of the base station in order to configure two-layer DCIs including allocation information of multiple PDSCHs and transmit the same. The processor may include multiple processors, and the processor may perform the control operation of the components of the base station by executing programs stored in the memory.

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memory including random access memory and flash memory, a read only memory (ROM), electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. In addition, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

In the drawings in which methods of the disclosure are described, the order of the description does not always correspond to the order in which steps are performed, and the order relationship between the steps may be changed or the steps may be performed in parallel.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a communication system, the method comprising:

receiving, through higher layer signaling, a configuration for a maximum rank value associated with a physical uplink shared channel (PUSCH) transmission and a configuration for a maximum number of multi-input multi-output (MIMO) layers associated with the PUSCH transmission;

performing the PUSCH transmission, one or more PUSCHs included in the PUSCH transmission comprising two transport blocks (TBs), based on that one or more of the maximum rank value or the maximum number of layers exceed 4; and

receiving downlink control information (DCI) through a physical downlink control channel (PDCCH),

wherein, in case that a configuration for spatial bundling related to hybrid automatic repeat request (HARQ-ACK) information for a second TB associated with the PUSCH transmission is not received through the higher layer signaling:

the DCI comprises a first HARQ-ACK bitmap for a first TB associated with the PUSCH transmission and a second HARQ-ACK bitmap for a second TB associated with the PUSCH transmission; and

based on that (i) one or more least significant bits (LSBs) among bits corresponding to the second HARQ-ACK bitmap are truncated or (ii) one or more zero padding bits are added after an LSB of PUSCH scheduling DCI, the number of bits included in the DCI is identified as being equal to the number of bits included in the PUSCH scheduling DCI.

2. The method of claim 1, wherein a HARQ process index is mapped in ascending order from a most significant bit (MSB) to an LSB of the first HARQ-ACK bitmap, and each bit of the first HARQ-ACK bitmap indicates acknowledgement (ACK) or negative ACK (NACK) of a first TB associated with a corresponding HARQ-ACK process,

wherein the HARQ process index is mapped in ascending order from an MSB to an LSB of bits corresponding to the second HARQ-ACK bitmap, and each bit corresponding to the second HARQ-ACK bitmap indicates ACK or NACK of a second TB associated with a corresponding HARQ-ACK process,

wherein, in case that a configuration for the number of HARQ processes is received through the higher layer signaling, the number of bits corresponding to the first HARQ-ACK bitmap and the number of bits corresponding to the second HARQ-ACK bitmap are each 32 bits, and

wherein, in case that the configuration for the number of HARQ processes is not received through the higher layer signaling, the number of bits corresponding to the first HARQ-ACK bitmap and the number of bits corresponding to the second HARQ-ACK bitmap are each 16 bits.

3. The method of claim 1, wherein, in case that the configuration for the spatial bundling is received through the higher layer signaling:

the DCI comprises a third HARQ-ACK bitmap;

the third HARQ-ACK bitmap is based on that, for an identical HARQ process, the spatial bundling is applied between a bit corresponding to the first HARQ-ACK bitmap and a bit corresponding to the second HARQ-ACK bitmap; and

the spatial bundling corresponds to a logical XOR operation or a logical OR operation.

4. The method of claim 3, wherein the truncation of the one or more LSBs, the adding of the one or more zero padding bits, or the applying of the spatial bundling is applied in case that the number of bits corresponding to the DCI is greater than the number of bits corresponding to the PUSCH scheduling DCI.

5. A terminal in a communication system, the terminal comprising:

a transceiver; and
a processor connected to the transceiver,
wherein the processor is configured to:

receive, through higher layer signaling, a configuration for a maximum rank value associated with a physical uplink shared channel (PUSCH) transmission and a configuration for a maximum number of multi-input multi-output (MIMO) layers associated with the PUSCH transmission;
perform the PUSCH transmission, one or more PUSCHs included in the PUSCH transmission comprising two transport blocks (TBs), based on that one or more of the maximum rank value or the maximum number of layers exceed 4; and
receive downlink control information (DCI) through a physical downlink control channel (PDCCH), and wherein, in case that a configuration for spatial bundling related to hybrid automatic repeat request (HARQ-ACK) information for a second TB associated with the PUSCH transmission is not received through the higher layer signaling:

the DCI comprises a first HARQ-ACK bitmap for a first TB associated with the PUSCH transmission and a second HARQ-ACK bitmap for a second TB associated with the PUSCH transmission; and
based on that (i) one or more least significant bits (LSBs) among bits corresponding to the second HARQ-ACK bitmap are truncated or (ii) one or more zero padding bits are added after an LSB of PUSCH scheduling DCI, the number of bits included in the DCI is identified as being equal to the number of bits included in the PUSCH scheduling DCI.

6. The terminal of claim 5, wherein a HARQ process index is mapped in ascending order from a most significant bit (MSB) to an LSB of the first HARQ-ACK bitmap, and each bit of the first HARQ-ACK bitmap indicates acknowledgement (ACK) or negative ACK (NACK) of a first TB associated with a corresponding HARQ-ACK process,

wherein the HARQ process index is mapped in ascending order from an MSB to an LSB of bits corresponding to the second HARQ-ACK bitmap, and each bit corresponding to the second HARQ-ACK bitmap indicates ACK or NACK of a second TB associated with a corresponding HARQ-ACK process,
wherein, in case that a configuration for the number of HARQ processes is received through the higher layer signaling, the number of bits corresponding to the first HARQ-ACK bitmap and the number of bits corresponding to the second HARQ-ACK bitmap are each 32 bits, and
wherein, in case that the configuration for the number of HARQ processes is not received through the higher layer signaling, the number of bits corresponding to the first HARQ-ACK bitmap and the number of bits corresponding to the second HARQ-ACK bitmap are each 16 bits.

7. The terminal of claim 5, wherein, in case that the configuration for the spatial bundling is received through the higher layer signaling:

the DCI comprises a third HARQ-ACK bitmap;
the third HARQ-ACK bitmap is based on that, for an identical HARQ process, the spatial bundling is applied between a bit corresponding to the first HARQ-ACK bitmap and a bit corresponding to the second HARQ-ACK bitmap; and
the spatial bundling corresponds to a logical XOR operation or a logical OR operation.

8. The terminal of claim 7, wherein the truncation of the one or more LSBs, the adding of the one or more zero padding bits, or the applying of the spatial bundling is applied in case that the number of bits corresponding to the DCI is greater than the number of bits corresponding to the PUSCH scheduling DCI.

9. A method performed by a base station in a communication system, the method comprising:

transmitting, through higher layer signaling, a configuration for a maximum rank value associated with a physical uplink shared channel (PUSCH) transmission and a configuration for a maximum number of multi-input multi-output (MIMO) layers associated with the PUSCH transmission;

receiving the PUSCH transmission, one or more PUSCHs included in the PUSCH transmission comprising two transport blocks (TBs), based on that one or more of the maximum rank value or the maximum number of layers exceed 4; and

transmitting downlink control information (DCI) through a physical downlink control channel (PDCCH), wherein, in case that a configuration for spatial bundling related to hybrid automatic repeat request (HARQ-ACK) information for a second TB associated with the PUSCH transmission is not transmitted through the higher layer signaling:

the DCI comprises a first HARQ-ACK bitmap for a first TB associated with the PUSCH transmission and a second HARQ-ACK bitmap for a second TB associated with the PUSCH transmission; and

based on that (i) one or more least significant bits (LSBs) among bits corresponding to the second HARQ-ACK bitmap are truncated or (ii) one or more zero padding bits are added after an LSB of PUSCH scheduling DCI, the number of bits included in the DCI is identified as being equal to the number of bits included in the PUSCH scheduling DCI.

10. The method of claim 9, wherein a HARQ process index is mapped in ascending order from a most significant bit (MSB) to an LSB of the first HARQ-ACK bitmap, and each bit of the first HARQ-ACK bitmap indicates acknowledgement (ACK) or negative ACK (NACK) of a first TB associated with a corresponding HARQ-ACK process,

wherein the HARQ process index is mapped in ascending order from an MSB to an LSB of bits corresponding to the second HARQ-ACK bitmap, and each bit corresponding to the second HARQ-ACK bitmap indicates ACK or NACK of a second TB associated with a corresponding HARQ-ACK process,

wherein, in case that a configuration for the number of HARQ processes is transmitted through the higher layer signaling, the number of bits corresponding to the first HARQ-ACK bitmap and the number of bits corresponding to the second HARQ-ACK bitmap are each 32 bits, and

wherein, in case that the configuration for the number of HARQ processes is not transmitted through the higher layer signaling, the number of bits corresponding to the first HARQ-ACK bitmap and the number of bits corresponding to the second HARQ-ACK bitmap are each 16 bits.

11. The method of claim 9, wherein, in case that the configuration for the spatial bundling is transmitted through the higher layer signaling:

the DCI comprises a third HARQ-ACK bitmap;

the third HARQ-ACK bitmap is based on that, for an identical HARQ process, the spatial bundling is applied between a bit corresponding to the first HARQ-ACK bitmap and a bit corresponding to the second HARQ-ACK bitmap; and

the spatial bundling corresponds to a logical XOR operation or a logical OR operation.

12. The method of claim 11, wherein the truncation of the one or more LSBs, the adding of the one or more zero padding bits, or the applying of the spatial bundling is applied in case that the number of bits corresponding to the DCI is greater than the number of bits corresponding to the PUSCH scheduling DCI.

13. A base station in a communication system, the base station comprising:

a transceiver; and
a processor connected to the transceiver,
wherein the processor is configured to:

transmit, through higher layer signaling, a configuration for a maximum rank value associated with a physical uplink shared channel (PUSCH) transmission and a configuration for a maximum number of multi-input multi-output (MIMO) layers associated with the PUSCH transmission;

receive the PUSCH transmission, one or more PUSCHs included in the PUSCH transmission comprising two transport blocks (TBs), based on that one or more of the maximum rank value or the maximum number of layers exceed 4; and

transmit downlink control information (DCI) through a physical downlink control channel (PDCCH), and wherein, in case that a configuration for spatial bundling related to hybrid automatic repeat request (HARQ-ACK) information for a second TB associated with the PUSCH transmission is not transmitted through the higher layer signaling:

the DCI comprises a first HARQ-ACK bitmap for a first TB associated with the PUSCH transmission and a second HARQ-ACK bitmap for a second TB associated with the PUSCH transmission; and
based on that (i) one or more least significant bits (LSBs) among bits corresponding to the second HARQ-ACK bitmap are truncated or (ii) one or more zero padding bits are added after an LSB of PUSCH scheduling DCI, the number of bits included in the DCI is identified as being equal to the number of bits included in the PUSCH scheduling DCI.

14. The base station of claim 13, wherein a HARQ process index is mapped in ascending order from a most significant bit (MSB) to an LSB of the first HARQ-ACK bitmap, and each bit of the first HARQ-ACK bitmap indicates acknowledgement (ACK) or negative ACK (NACK) of a first TB associated with a corresponding HARQ-ACK process,

wherein the HARQ process index is mapped in ascending order from an MSB to an LSB of bits corresponding to the second HARQ-ACK bitmap, and each bit corresponding to the second HARQ-ACK bitmap indicates ACK or NACK of a second TB associated with a corresponding HARQ-ACK process,
wherein, in case that a configuration for the number of HARQ processes is transmitted through the higher layer signaling, the number of bits corresponding to the first HARQ-ACK bitmap and the number of bits corresponding to the second HARQ-ACK bitmap are each 32 bits, and
wherein, in case that the configuration for the number of HARQ processes is not transmitted through the higher layer signaling, the number of bits corresponding to the first HARQ-ACK bitmap and the number of bits corresponding to the second HARQ-ACK bitmap are each 16 bits.

15. The base station of claim 13, wherein, in case that the configuration for the spatial bundling is transmitted through the higher layer signaling:

the DCI comprises a third HARQ-ACK bitmap;
the third HARQ-ACK bitmap is based on that, for an identical HARQ process, the spatial bundling is applied between a bit corresponding to the first HARQ-ACK bitmap and a bit corresponding to the second HARQ-ACK bitmap; and
the spatial bundling corresponds to a logical XOR operation or a logical OR operation, and
wherein the truncation of the one or more LSBs, the adding of the one or more zero padding bits, or the applying of the spatial bundling is applied in case that the number of bits corresponding to the DCI is greater than the number of bits corresponding to the PUSCH scheduling DCI.

# FIG. 1

1 subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

Resource element (k,l) (101)

$N_{RB}^{\mu} N_{sc}^{RB}$ subcarriers

Resource block $N_{sc}^{RB}$ subcarriers (104)

$K = 0$

$\bar{l} = 0$

$\bar{l} = 14 \cdot 2^{\mu} - 1$

Frequency

Time

# FIG. 2

EP 4 787 753 A1

# FIG. 3

BWP#1
(301)

BWP#2
(302)

Frequency

UE bandwidth (300)

# FIG. 4

Duration
(404)

Frequency
resource
(403)

UE bandwidth
(410)

Slot (420)

Frequency

Time

Control resource set #1 (401)

Control resource set #2 (402)

FIG. 5

1 symbol
(501)

DMRS
(505)

1 PRB
(502)

CCE
(504)

REG
(503)

# FIG. 6

Period [605]

Rate matching resource [602]

Frequency-domain allocation [604]

Time-domain allocation [603]

Slot#0

Slot#1

Slot#2

PDSCH [601]

Frequency

Time

EP 4 787 753 A1

# FIG. 7

RA type 0
(7-00) | Bitmap (7-15)

RA type 1
(7-05) | Starting VRB (7-20) | Length (7-25)

Both RA types
0 & 1
(7-10) | 1 bit for indicating RA type (7-30) | Max (payload for RA type 0, payload for RA type 1) (7-35)

# FIG. 8

S
(8-00)

L (8-05)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \quad (8\text{-}10)$$

# FIG. 9

$\mu_{\text{PDCCH}} = 1$

Slot n | Slot n + 1 | ... | t

(9-00)

$\mu_{\text{PDSCH}} = 1$

PDSCH

Slot n + $K_0$ | ... | t

$\mu_{\text{PDCCH}} = 1$

Slot n | Slot n + 1 | ... | t

(9-05)

$\mu_{\text{PDSCH}} = 2$

PDSCH

$\text{Slot} \left\lfloor n \cdot \dfrac{2^{\mu_{\text{PDSCH}}}}{2^{\mu_{\text{PDCCH}}}} \right\rfloor$

$\text{Slot} \left\lfloor n \cdot \dfrac{2^{\mu_{\text{PDSCH}}}}{2^{\mu_{\text{PDCCH}}}} \right\rfloor + K_0$

EP 4 787 753 A1

# FIG. 10

**Single cell LTE/NR (S00)**

gNB
- SDAP (S25)
- PDCP (S30)
- RLC  (S35)
- MAC (S40)
- PHY (S45)

UE
- PHY (S50)
- MAC (S55)
- RLC (S60)
- PDCP (S65)
- SDAP (S70)

**Carrier aggregation (S10)**

gNB
- SDAP
- PDCP
- RLC
- MAC
- PHY  ...  PHY

UE
- PHY  ...  PHY
- MAC
- RLC
- PDCP
- SDAP

**Dual connectivity (S20)**

MgNB
- SDAP
- PDCP
- RLC
- MAC
- PHY

SgNB
- RLC
- MAC
- PHY

UE
- PHY
- MAC
- RLC
- PDCP
- SDAP

UE
- PHY
- MAC
- RLC

EP 4 787 753 A1

FIG. 11

DCI format 0_1 scheduling PUSCH

40 bits

(a) 16HPNs

| | | HARQ-ACK for first TB | HARQ-ACK for second TB | TPC | Zero padding |

1 bits  1 bits  16 bits  16 bits  2 bits  4 bits

(b) 32HPNs

| | | HARQ-ACK for first TB | HARQ-ACK for second TB | TPC |

1 bits  1 bits  32 bits  32 bits  2 bits

Identifier for DCI format    DFI flag

EP 4 787 753 A1

# FIG. 12

|  | DCI format 0_1 scheduling PUSCH |  |  |
|---|---|---|---|

40 bits

| 32HPNs | | | HARQ-ACK bitmap | TPC | Zero padding |

1 bits   1 bits            32 bits            2 bits   4 bits

▨ Identifier for DCI format      ▥ DFI flag

FIG. 13

DCI format 0_1 scheduling PUSCH

40 bits

32HPNs | HARQ-ACK bitmap for first TB | HARQ-ACK bitmap for second TB | TPC

1 bits   1 bits          32 bits                    4 bits    2 bits

Identifier for DCI format        DFI flag

# FIG. 14

Report, by UE to base station, maximum number of MIMO layers or maximum rank for uplink of UE as UE capability — 1400

Receive, by UE from base station, higher layer signal for configuring maximum number of MIMO layers or maximum rank for uplink — 1410

When maximum number of MIMO layers or maximum rank exceeds 4, obtain, by UE, HARQ bitmap for $1^{st}$ TB field and HARQ bitmap for $2^{nd}$ TB field in DCI format 0_1 including CG-DFI — 1420

Obtain valid HARQ-ACK information from HARQ bitmap for $1^{st}$ TB field and HARQ bitmap for $2^{nd}$ TB field, and determine whether to retransmit CG PUSCH and determine to update contention window size, based on HARQ-ACK information — 1430

# FIG. 15

Report, by UE to base station, maximum number of
MIMO layers or maximum rank for uplink of UE as UE capability — 1500

Receive, by UE from base station, higher layer signal for
configuring maximum number of MIMO layers or
maximum rank for uplink — 1510

When maximum number of MIMO layers or
maximum rank exceeds 4, assume, by UE, that HARQ bitmap for
$1^{st}$ TB field and HARQ bitmap for $2^{nd}$ TB field are included in
DCI format 0_1 including CG-DFI — 1520

When length of DCI format 0_1 including CG-DFI is greater than
length of DCI format 0_1 scheduling PUSCH, perform method of
reducing length of CG-DFI — 1530

Receive CG-DFI determined according to reduction method to
obtain valid HARQ-ACK information, and determine whether to
retransmit CG PUSCH and determine to update contention
window size, based on HARQ-ACK information — 1540

FIG. 16

# FIG. 17

1705 ~ Base station processor

Base station receiver ~ 1700

Base station transmitter ~ 1710

# EP 4 787 753 A1

## INTERNATIONAL SEARCH REPORT

| | International application No. |
|---|---|
| | **PCT/KR2024/017022** |

### A. CLASSIFICATION OF SUBJECT MATTER

**H04L 1/1812**(2023.01)i; **H04L 1/1607**(2023.01)i; **H04L 1/00**(2006.01)i; **H04L 5/00**(2006.01)i

According to International Patent Classification (IPC) or to both national classification and IPC

### B. FIELDS SEARCHED

Minimum documentation searched (classification system followed by classification symbols)

H04L 1/1812(2023.01); H04B 7/04(2006.01); H04B 7/0404(2017.01); H04B 7/0413(2017.01); H04B 7/06(2006.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH 전송(physical uplink shared channel transmission), 레이어(layer), 랭크(rank), 공간 번들링(spatial bundling), 제외(truncation), 제로 패딩 비트(zero padding bit)

### C. DOCUMENTS CONSIDERED TO BE RELEVANT

| Category* | Citation of document, with indication, where appropriate, of the relevant passages | Relevant to claim No. |
|---|---|---|
| A | WO 2022-238868 A1 (GUANGDONG OPPO MOBILE TELECOMMUNICATIONS CORP., LTD.) 17 November 2022 (2022-11-17)<br>See claims 1 and 11. | 1-15 |
| A | KR 10-2020-0127053 A (LG ELECTRONICS INC.) 09 November 2020 (2020-11-09)<br>See paragraph [0724]; and claims 1-2. | 1-15 |
| A | WO 2016-036205 A2 (SAMSUNG ELECTRONICS CO., LTD.) 10 March 2016 (2016-03-10)<br>See paragraphs [0072]-[0075]; claim 1; and figure 6. | 1-15 |
| A | KR 10-2021-0083845 A (SAMSUNG ELECTRONICS CO., LTD.) 07 July 2021 (2021-07-07)<br>See paragraphs [0412]-[0417]; claim 1; and figures 14-15. | 1-15 |
| A | KR 10-2022-0146580 A (LG ELECTRONICS INC.) 01 November 2022 (2022-11-01)<br>See paragraphs [0455]-[0462]; claim 1; and figure 15. | 1-15 |

☐ Further documents are listed in the continuation of Box C.  ☑ See patent family annex.

| \* | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 February 2025** | **10 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/017022**

| Patent document cited in search report | | | Publication date (day/month/year) | Patent family member(s) | | | Publication date (day/month/year) |
|---|---|---|---|---|---|---|---|
| WO | 2022-238868 | A1 | 17 November 2022 | CN | 117223371 | A | 12 December 2023 |
| | | | | EP | 4335218 | A1 | 13 March 2024 |
| | | | | EP | 4335218 | A4 | 20 November 2024 |
| | | | | US | 2024-0063977 | A1 | 22 February 2024 |
| KR | 10-2020-0127053 | A | 09 November 2020 | CN | 110168947 | A | 23 August 2019 |
| | | | | CN | 110168947 | B | 27 August 2021 |
| | | | | EP | 3480966 | A1 | 08 May 2019 |
| | | | | EP | 3480966 | A4 | 25 December 2019 |
| | | | | EP | 3480966 | B1 | 05 May 2021 |
| | | | | EP | 3883139 | A1 | 22 September 2021 |
| | | | | KR | 10-2019-0029722 | A | 20 March 2019 |
| | | | | KR | 10-2174831 | B1 | 05 November 2020 |
| | | | | KR | 10-2271083 | B1 | 01 July 2021 |
| | | | | US | 10516514 | B2 | 24 December 2019 |
| | | | | US | 10911195 | B2 | 02 February 2021 |
| | | | | US | 10965418 | B2 | 30 March 2021 |
| | | | | US | 2019-0207731 | A1 | 04 July 2019 |
| | | | | US | 2019-0379501 | A1 | 12 December 2019 |
| | | | | US | 2020-0213054 | A1 | 02 July 2020 |
| | | | | WO | 2018-128504 | A1 | 12 July 2018 |
| WO | 2016-036205 | A2 | 10 March 2016 | KR | 10-2016-0028976 | A | 14 March 2016 |
| | | | | KR | 10-2487525 | B1 | 12 January 2023 |
| | | | | US | 10237034 | B2 | 19 March 2019 |
| | | | | US | 2017-0201363 | A1 | 13 July 2017 |
| | | | | WO | 2016-036205 | A3 | 28 April 2016 |
| KR | 10-2021-0083845 | A | 07 July 2021 | US | 2023-0029850 | A1 | 02 February 2023 |
| | | | | WO | 2021-133121 | A1 | 01 July 2021 |
| KR | 10-2022-0146580 | A | 01 November 2022 | CN | 115485983 | A | 16 December 2022 |
| | | | | CN | 115485983 | B | 19 April 2024 |
| | | | | EP | 4113854 | A1 | 04 January 2023 |
| | | | | EP | 4113854 | A4 | 04 October 2023 |
| | | | | JP | 2023-522649 | A | 31 May 2023 |
| | | | | JP | 7493057 | B2 | 30 May 2024 |
| | | | | KR | 10-2541191 | B1 | 13 June 2023 |
| | | | | US | 11800555 | B2 | 24 October 2023 |
| | | | | US | 12069715 | B2 | 20 August 2024 |
| | | | | US | 2023-0061346 | A1 | 02 March 2023 |
| | | | | US | 2024-0032088 | A1 | 25 January 2024 |
| | | | | WO | 2021-221476 | A1 | 04 November 2021 |

Form PCT/ISA/210 (patent family annex) (July 2022)